(19) Europäisches Patentamt / European Patent Office / Office européen des brevets

(11) **EP 3 905 050 B1**

(12) **EUROPEAN PATENT SPECIFICATION**

(45) Date of publication and mention
of the grant of the patent:
**24.05.2023   Bulletin 2023/21**

(21) Application number: **21161819.4**

(22) Date of filing: **10.03.2021**

(51) International Patent Classification (IPC):
**G06F 11/34** (2006.01)

(52) Cooperative Patent Classification (CPC):
**G06F 11/3452; G06F 11/3442**

(54) **PRESCRIPTIVE ANALYTICS BASED NOSQL DATABASE SERVICE OPTIMIZATION SYSTEM FOR CLOUD COMPUTING**

SYSTEM ZUR AUF PRÄSKRIPTIVER ANALYTIK BASIERENDEN DIENSTOPTIMIERUNG VON NOSQL-DATENBANK FÜR CLOUD-COMPUTING

SYSTÈME D'OPTIMISATION DE SERVICES DE BASE DE DONNÉES NOSQL BASÉ SUR L'ANALYSE PRESCRIPTIVE POUR L'INFORMATIQUE EN NUAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2020   IN 202041018140**
**09.06.2020   US 202016896681**

(43) Date of publication of application:
**03.11.2021   Bulletin 2021/44**

(73) Proprietor: **Accenture Global Solutions Limited**
**Dublin 4 (IE)**

(72) Inventors:
• **SRINIVASAN, Madhan Kumar**
**Dublin 4 (IE)**
• **PV, Guruprasad**
**Dublin 4 (IE)**
• **SIVACHARI RAGE, Samba**
**Dublin 4 (IE)**

(74) Representative: **Boult Wade Tennant LLP**
**Salisbury Square House**
**8 Salisbury Square**
**London EC4Y 8AP (GB)**

(56) References cited:
**EP-A1- 3 495 952       EP-A1- 3 553 658**
**US-B1- 9 454 321**

## Description

### RELATED APPLICATION

The present application claims priority to Indian Provisional Patent Application No. 202041018140, entitled "PRESCRIPTIVE ANALYTICS BASED NOSQL DATABASE SERVICE OPTIMIZATION SYSTEM FOR CLOUD COMPUTING" filed on April 28, 2020, and to US Patent Application No. 16/896,681 filed on June 9, 2020.

### Technical Field

This disclosure relates to database service optimization via a prescriptive analytics based NoSQL database service optimization system.

### Background

Rapid advances in communications and storage technologies, driven by immense customer demand, have resulted in widespread adoption of cloud systems for managing large data payloads, distributed computing, and record systems. As one example, modern enterprise systems, for example those relying on object storage architectures, presently maintain data records many petabytes in size in the cloud. Improvements in tools for cloud resource allocation, utilization, and consumption prediction will further enhance the capabilities of cloud computing systems.

EP3495952 discusses a multi-layer committed compute reservation stack for generating prescriptive reservation matrices for controlling static reservation for computing resources. US9454321 discusses methods for monitoring and improving performance at a storage system include analyzing storage performance statistics collected during operations of a storage system. EP3553658 discusses a system that supports distributed multiple tier multi-node serverless analytics task execution.

### Summary

The invention is defined in the appended independent claims. Preferred embodiments of the invention are defined in the appended dependent claims.

This disclosure relates to systems and methods for optimizing throughput of a NoSQL database service commissioned by users, such as business organizations, of cloud based computing architectures to process their data.

In one embodiment, a system for optimizing NoSQL database service throughput for users of these cloud based services is disclosed. The system includes a network interface circuitry and an optimization circuitry in data communication with the network interface circuitry. The network interface circuitry is configured to receive utilization tracking data for a target NoSQL database service provisioned with provisioned throughputs for processing a user's cloud based services data. The provisioned throughputs may represent a contracted capacity of the target NoSQL database service to process a user's data per unit time. The network interface circuitry sends a throughput optimization (TPO) token to a host interface. The host interface is configured to execute the TPO token to provision the target NoSQL database service with a recommended throughput. The optimization circuitry is configured to execute a TPO stack. At a prescriptive engine layer of the TPO stack, the TPO stack may be executable to obtain consumed throughputs for each unit time from the utilization tracking data; predict, based on the consumed throughputs, a prediction-based throughput over a TPO interval for the target NoSQL database service with a prediction engine; select target consumed throughputs from the consumed throughputs based on a predetermined time granularity; determine a statistical throughput consumption value from the target consumed throughputs, the statistical throughput consumption value is greater than consumed throughput values of a predetermined portion of the target consumed throughputs; calculate a statistics-based throughput over the TPO interval for the target NoSQL database service based on the statistical throughput consumption value; extract database service performance metric data for each unit time from the utilization tracking data; select target performance metric data from the database service performance metric data based on the predetermined time granularity; determine a statistical performance metric value from the target performance metric data, the statistical performance metric value is greater than performance metric values of a predetermined portion of the target performance metric data; select one of the prediction-based throughput and the statistics-based throughput as the recommended throughput based on the statistical performance metric value, a performance metric threshold, and a prediction accuracy of the prediction engine; perform a throughput determination to execute a throughput optimization for the target NoSQL database service based on the recommended throughput; and generate the TPO token based on the throughput determination.

In another embodiment, a method for optimizing database service throughput is disclosed. The method includes, at network interface circuitry, receiving utilization tracking data for a target NoSQL database service provisioned with provisioned throughputs. The provisioned throughput represents a capacity of the target NoSQL database service to process data per unit time. An optimization circuitry is in data communication with the network interface circuitry, the method executes a throughput optimization (TPO) stack, including, at a prescriptive engine layer of the TPO stack, obtaining consumed throughputs for each unit time from the utilization tracking data; predicting based on the consumed throughputs, a prediction-based throughput over a TPO interval for the target NoSQL database service with a prediction engine; selecting target consumed throughputs from the consumed throughputs based on a predetermined time granularity; determining a statistical throughput consumption value from the target consumed throughputs, the statistical throughput consumption value is greater than consumed throughput values of a predetermined portion of the target consumed throughputs; calculating a statistics-based throughput over the TPO interval for the target NoSQL database service based on the statistical throughput consumption value; extracting database service performance metric data for each unit time from the utilization tracking data; selecting target performance metric data from the database service performance metric data based on the predetermined time granularity; determining a statistical performance metric value from the target performance metric data, the statistical performance metric value is greater than performance metric values of a predetermined portion of the target performance metric data; selecting one of the prediction-based throughput and the statistics-based throughput as a recommended throughput based on the statistical performance metric value, a performance metric threshold, and a prediction accuracy of the prediction engine; performing a throughput determination to execute a throughput optimization for the target NoSQL database service based on the recommended throughput; and generating a TPO token based on the throughput determination. The method includes sending, via the network interface circuitry, the TPO token to a host interface configured to execute the TPO token to provision the target NoSQL database service with the recommended throughput.

In another embodiment, a product for optimizing database service throughput is disclosed. The product may include machine-readable media other than a transitory signal and instructions stored on the machine-readable media. The instructions are configured to, when executed, cause a machine to, at network interface circuitry, receive utilization tracking data for a target NoSQL database service provisioned with provisioned throughputs. The provisioned throughput represents a capacity of the target NoSQL database service to process data per unit time. An optimization circuitry is in data communication with the network interface circuitry. At the optimization circuitry executing a throughput optimization (TPO) stack, the instructions are configured to, when executed, cause a machine to, at a prescriptive engine layer of the TPO stack, obtain consumed throughputs for each unit time from the utilization tracking data; predict, at the prescriptive engine layer, based on the consumed throughputs, a prediction-based throughput over a TPO interval for the target NoSQL database service with a prediction engine; select target consumed throughputs from the consumed throughputs based on a predetermined time granularity; determine a statistical throughput consumption value from the target consumed throughputs, the statistical throughput consumption value is greater than consumed throughput values of a predetermined portion of the target consumed throughputs; calculate a statistics-based throughput over the TPO interval for the target NoSQL database service based on the statistical throughput consumption value; extract database service performance metric data for each unit time from the utilization tracking data; select target performance metric data from the database service performance metric data based on the predetermined time granularity; determine a statistical performance metric value from the target performance metric data, the statistical performance metric value is greater than performance metric values of a predetermined portion of the target performance metric data; select one of the prediction-based throughput and the statistics-based throughput as a recommended throughput based on the statistical performance metric value and an performance metric threshold; perform a throughput determination to execute a throughput optimization for the target NoSQL database service based on the recommended throughput; and generate a TPO token based on the throughput determination. The instructions are configured to, when executed, cause a machine to send, via the network interface circuitry, the TPO token to a host interface configured to execute the TPO token to provision the target NoSQL database service with the recommended throughput.

One interesting feature of the system and method described below may be that it may accurately analyze the throughput of a cloud NoSQL database service such as a NoSQL database or a NoSQL container to be consumed in a next time interval. For example, the system may predict a prediction-based throughput over the next time interval based on historically consumed throughputs with a deep-learning prediction engine. Also, the system may calculate a statistics-based throughput that exceeds a predetermined portion of historically consumed throughputs, and select one of the prediction-based throughput and the statistics-based throughput as a recommended throughput based on a historical database service performance metric and the accuracy of the prediction engine. In an example, where the database service performance metric is within a predetermined performance metric threshold and the accuracy of the prediction engine is greater than a predetermined accuracy threshold, the system may select the prediction-based throughput as the recommended throughput. Where the accuracy of the prediction engine is below a predetermined accuracy threshold, the system may select the statistics-based throughput as the recommended throughput.

Alternatively or additionally, another interesting feature of the system and method described below may be that it may present deeper insights into the distribution of the utilization curve of the NoSQL database service in the prescriptive analysis. In calculating the statistics-based throughput, the system may make use of percentile calculation instead of average calculation. In this way, the outlier data such as unacceptably high consumed throughput may be taken into account in the throughput optimization analysis.

Alternatively or additionally, another interesting feature of the system and method described below may be that it may optimize the throughput of the NoSQL database service without sacrificing the computing performance of the NoSQL database service. For example, the system may selectively add throughput buffer for the recommended throughput. Where the ratio of the throughput provisioned on the NoSQL database service to the throughput consumed by the NoSQL database service is less than a consumption ratio threshold, the system may add higher throughput buffer for the recommended throughput. Otherwise, the system may add lower throughput buffer to the recommended throughput.

The above embodiments and other aspects and alternatives of their implementations are explained in greater detail in the drawings, the descriptions, and the claims.

**Brief Description of the Drawings**

The present disclosure may be better understood with reference to the following drawings and description. The components in the figures are not necessarily to scale. Moreover, in the figures, like-referenced numerals designate corresponding parts throughout the different views.

Figure 1A shows an example system for NoSQL database service throughput optimization in accordance with an embodiment.
Figure 1B shows an example throughput provisions on NoSQL database services.
Figure 2 shows an example multiple-layer throughput optimization stack included in a system.
Figure 3 shows example throughput optimization logic.
Figure 4 shows an example system execution implementation for a prescriptive engine layer of the throughput optimization stack in accordance with an embodiment.
Figures 5A-5D show an example throughput optimization control interface.
Figure 6 shows a second example throughput optimization control interface.
Figure 7 shows an example interaction logic with a throughput optimization control interface in accordance with an embodiment.
Figure 8 shows an example system execution environment for the throughput optimization stack.

**Detailed Description**

NoSQL database services may provide cloud computing services to a user such as a business organization, including data storage service and data processing service. NoSQL database services may handle larger volumes of rapidly changing unstructured data, for example, data generated from the cloud, mobile, social media and big data, than a relational (SQL) database with rows and tables.

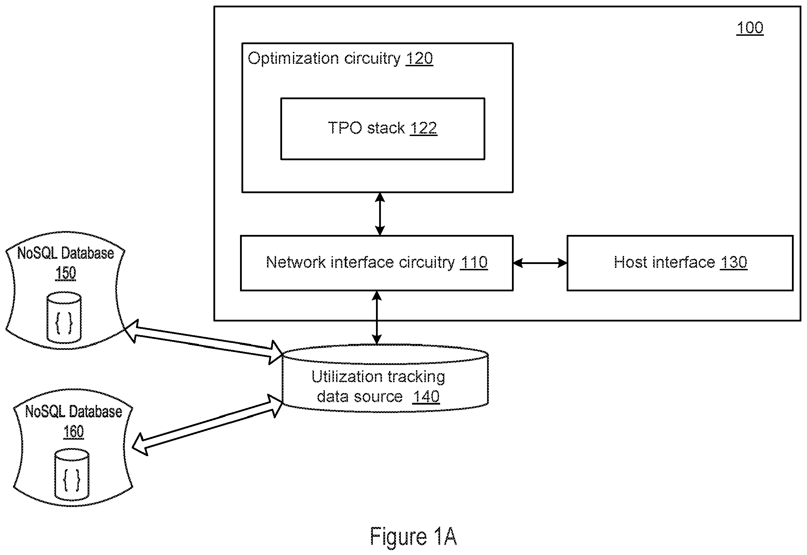

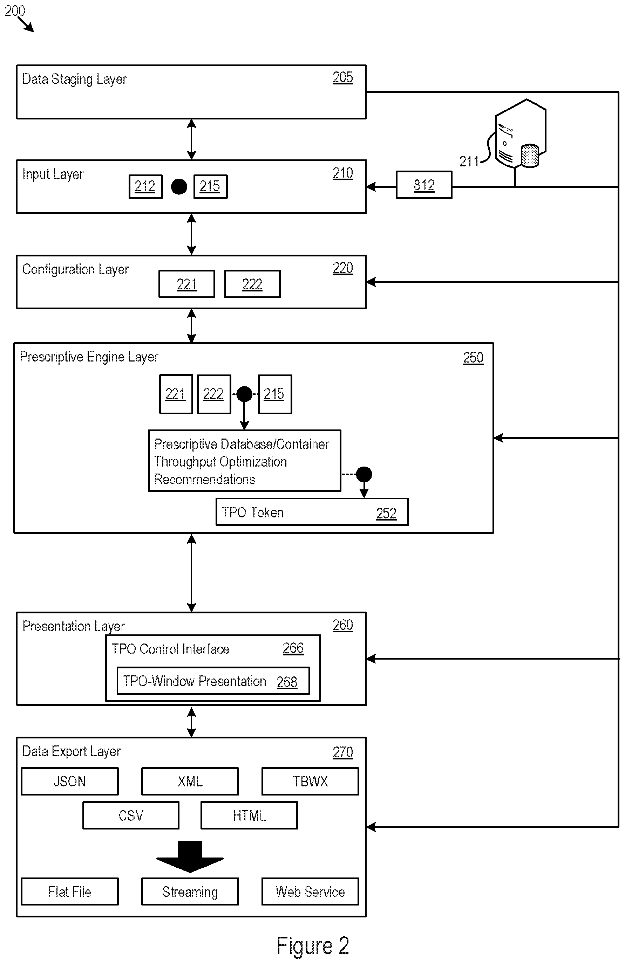

Figure 1A illustrates an example system 100 for NoSQL database service throughput optimization. The system 100 may include a network interface circuitry 110, an optimization circuitry 120, and a host interface 130. The network interface circuitry 110 may communicate with the optimization circuitry 120 and the host interface 130. The utilization tracking data source 140 may store the utilization track data of the cloud databases 150/160. The network interface circuitry 110 may communicate with the utilization tracking data source 140 to receive utilization tracking data for a target NoSQL database service such as the NoSQL Database 150 or 160. The optimization circuitry 120 may execute the throughput optimization (TPO) stack 122 to perform prescriptive analysis on the throughputs of the target NoSQL database service. The functions of the TPO stack 122 will be described in detail later with reference to Figure 2. During execution of the TPO stack 122, the optimization circuitry 120 may generate a TPO token which may, for example, include a logic rightsizing the throughput provisioned for the target NoSQL database service. The network interface circuitry 110 may send the TPO token to the host interface 130. The host interface 130 may, for example, include an Application Programming Interface (API) for rightsizing the provisioned throughput for a target NoSQL database service and execute the TPO token with the API to right size the throughput provisioned for the target NoSQL database service.

A NoSQL database service such as the NoSQL database 150 or 160 may be provisioned with provisioned throughputs. A provisioned throughput may represent a contracted capacity of the database service to process a contracting user's data per unit time. Data processing operations by the database service that are contracted by a user may include, for example, create operations, read operations, update operations, and delete operations. A throughput may be represented by, for example, a request unit rate, for example, request units per second (RU/s) being consumed by a user under their respective contract for data services.

Taking Azure Cosmos database as an example, the Cosmos database supports many APIs, such as SQL, MongoDB, Cassandra, Gremlin, and Table. Each API has its own set of database operations. These operations range from simple point reads and writes to complex queries. Each database operation consumes system resources based on the complexity of the operation. The Cosmos database may normalize the cost of all database operations as request units. In other words, the Cosmos database abstracts system resources, such as central processing unit (CPU), input/output operations per second (IOPS), and random access memory (RAM) that are required to perform the data processing operations requested by a user of Cosmos database to the request units. For example, the cost to read a 1 KB item is 1 RU. A minimum of 10 RU/s is required to store each 1 GB of data. All other database operations may be similarly assigned a cost using RUs. No matter which API the user uses to interact with the Cosmos database, costs may be measured by RUs. Whether the database operation is a write, read, or query, costs may be measured in RUs.

When a user contracts to use data storage and processing services provided by the Cosmos database, the Cosmos database may provision the user with RUs for the data services. However, the workloads of the data services may change over time. As a result, provisioned RUs may not reflect actual RU demands. For example, provisioned RUs may be much more than the RUs actually consumed by the user. In this example, the system 100 may enable the user to optimize the provisioned RUs, for example, by downsizing the provisioned RUs based on the historical RU utilization track data of the user. In this way, the system 100 may improve the utilization efficiency of the Cosmos database and the user's maintenance efficiency of the data services provided by the Cosmos database.

In the Cosmos database, the throughput, i.e., RUs, may be provisioned at two NoSQL database service levels, NoSQL database and NoSQL container. The NoSQL database may include, for example, a keyspace, a database, and a database account. The NoSQL container may include, for example, a collection, a graph, and a table. Thus, a NoSQL database service (Hereinafter database service) may represent a NoSQL database (Hereinafter database) or a NoSQL container (Hereinafter container).

In examples, a database may include a plurality of containers. When a throughput is provisioned on a database, the throughput may be shared across all the containers (which may be referred to as shared database containers) in the database. The portion of the throughput that a shared database container can receive may be based on the number of containers in the database, the choice of partition keys for the containers, and the distribution of the workload across various logical partitions of the containers.

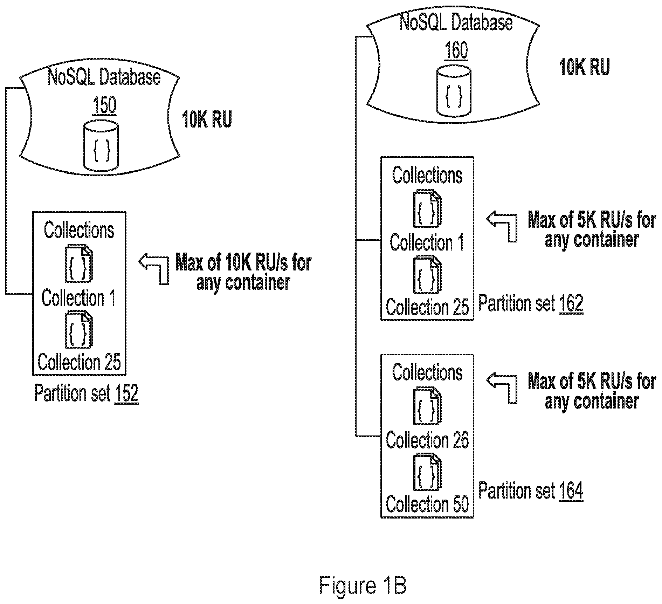

Figure 1B shows an example throughput provisions on the databases 150/160. In an example, the database 150 may include one partition set 152 which includes 25 containers. The database 150 of this example is provisioned with 10K (10,000) RUs, and the 25 containers may share this throughput. Any container may have a maximum throughput, such as, for example, 10K RU/s. In another example, the database 160 may include two partition sets 162/164. The partition set 162 of this example includes 25 containers 1 through 25, and the partition set 164 of this example includes 25 containers 26 through 50. The database 160 of this example is provisioned with 10K RUs. As such, the two partition sets 162/164 may split the throughput provisioned on the database 160, each of which is provisioned with, for example, 5K (5,000) RUs throughput. The containers within each of the two partition sets of the example may share the 5K RUs throughput. Additionally, a container may be provisioned with a dedicated throughput. Such dedicated throughput is exclusively reserved for the container.

In the embodiment, with reference to Figure 1A, the system 100 may perform prescriptive analysis on two database services, i.e., the databases 150/160, to optimize the throughput of the databases. However, it should be appreciated that the system 100 may perform the prescriptive analysis on one or more database services, including databases and containers within the databases. The database services may be located in the same or different geographical regions.

Figure 2 shows an example multiple layer TPO stack 200. The system described herein uses the TPO stack 200 to prescribe recommendations for database service throughput optimization based on analysis of data associated with the database service. The throughput optimization analysis performed by the system may include, for example, rightsizing/downsizing the provisioned throughputs on a database service such as a database and container. Further, the system may include in the analysis utilization tracking data and consumption metrics data of the database service. The consumption metrics data may, for example, include data of cost metrics of the database service. The utilization tracking data may include, for example, the tracking data of consumed throughputs as well as database service performance metric data. The consumed throughput may represent a historical database service throughput that was actually used per unit time.

The database service performance metric data includes rate limited request records, error rate records, and throughput failed request records. The rate limited request may represent an operation request(s) that is rejected when the consumed RU rate exceeds the provisioned RU rate. The throughput failed request may represent an operation request(s) that is throttled by the database service before the consumed RU rate exceeds the provisioned RU rate. In addition, request errors may occur in the course of processing operation requests by the database service, for example, due to database service unavailability or downtime, poor network performance, packet error, and bit error. These errors may be represented as error rates.

Thus, the TPO stack 200 may provide prescriptive recommendations for throughput optimization taking into account provisioned throughputs, consumed throughputs, database service performance metrics such as rate limited requests, throughput failed request, and error rates, consumption metrics data, and/or other data. As a result, the disclosed TPO stack techniques and architectures improve the operation efficiency of the underlying hardware by optimizing throughput of one or more database service.

In this example, the TPO stack 200 may include a data staging layer 205, an input layer 210, a configuration layer 220, a prescriptive engine layer 250, a presentation layer 260, and a data export layer 270. The TPO stack 200 may include a multiple-layer computing structure of hardware and software that may provide prescriptive analytical recommendations (e.g., throughput optimization prescriptions) through data analysis.

A stack may refer to a multi-layered computer architecture that defines the interaction of software and hardware resources at the multiple layers. The Open Systems Interconnection (OSI) model is an example of a stack-type architecture. The layers of a stack may pass data and hardware resources among themselves to facilitate data processing. As one example, for the TPO stack 200, the data staging layer 205 may provide the input layer 210 with storage resources to store ingested data within a database or other data structure. In some implementations, the data staging layer 205 may be deployed as a cloud-based database platform with the capability to process mass data. In an example, an underlying Big Data Lake of the database platform is capable of ingesting data from heterogeneous data sources such as Secured Storage, Hadoop file systems (HDFS) connections, relational databases, flat files, and other data operations. Hence, the data staging layer 205 may provide a hardware resource, e.g., memory resources, to the input layer 210. Accordingly, the multiple-layer stack architecture of the TPO stack 200 may improve the functioning of the underlying hardware.

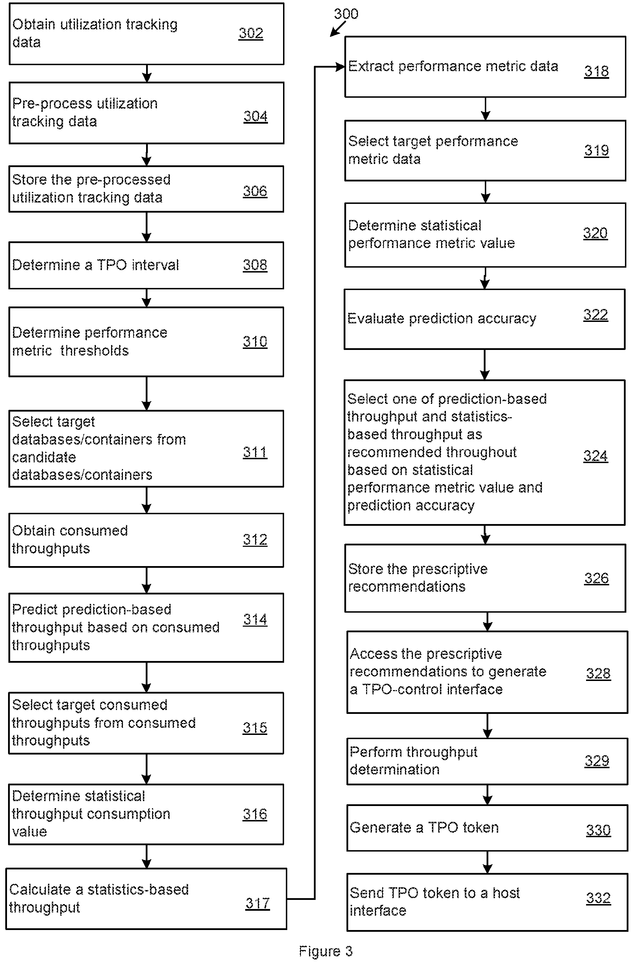

In the following, reference is made to Figure 2 and the corresponding example TPO logic (TOL) 300 in Figure 3. The logical features of TOL 300 may be implemented in various orders and combinations. For example, in a first implementation, one or more features may be omitted or reordered with respect to a second implementation. At the input layer 210 of the TPO stack 200, the TOL 300 may obtain utilization tracking data 212 of the database service as the input data (302). In some cases, the utilization tracking data 212 may be received via the network interface circuitry (e.g., communication interfaces 812, discussed below). The utilization tracking data 212 may be accessed at least in part, e.g., via the communication interfaces 812, from data sources 211, which may include, database service utilization files, database service performance metric files, database service expenditure files, or other data sources.

Optionally, at the input layer 210, the TOL 300 may pre-process the utilization tracking data 212 (304). In some implementations, the pre-processing may include data transformations on the utilization tracking data 212 such as z transformation, log transformation and data minimization. Alternatively or additionally, the pre-processing may treat/manage missing value data in the utilization tracking data 212. For example, the utilization tracking data may be used for further analysis only when utilization records in the utilization tracking data has corresponding expenditure records. Alternatively or additionally, the pre-processing may include data aggregation on the utilization tracking data 212. For example, the utilization data may be aggregated from minute-level granularity to hour-level granularity. Alternatively or additionally, the pre-processing may supplement exogenous utilization data to the utilization tracking data. The exogenous utilization data may include any seasonalbased utilization patterns. Additionally, outlier data such as extraordinarily high consumed throughput at a specific time unit may not be processed in the pre-processing for at least two reasons: the outlier data may accurately reflect the utilization of the database service and the outlier data may be useful in the subsequent optimization analysis to determine a recommended throughput.

The TOL 300 then may, at the input layer 210, store the pre-processed utilization tracking data 215 via a memory operation at the data staging layer 205 (306). In some implementations, the pre-processed utilization tracking data 215 may be indexed to speed up query processing.

At the configuration layer 220, the TOL 300 may determine a TPO interval 221 to optimize throughputs of the database service (308). For example, the TPO interval 221 may be predetermined to be periodical or non-periodical (e.g., hourly, six hours, daily, weekly, month-date). Alternatively or in addition, in another example, the TPO interval 221 may be selected by the system operator.

In addition, to optimize the throughputs of the database service, the TOL 300 may, at the configuration layer 220, further determine various performance metric thresholds 222 for the database services (310). The performance metric thresholds may include, for example, a rate limited request threshold, an error rate threshold, and a throughput failed request threshold. For example, the TOL 300 may determine the performance metric thresholds 222 for the database service through selections received from the system operator.

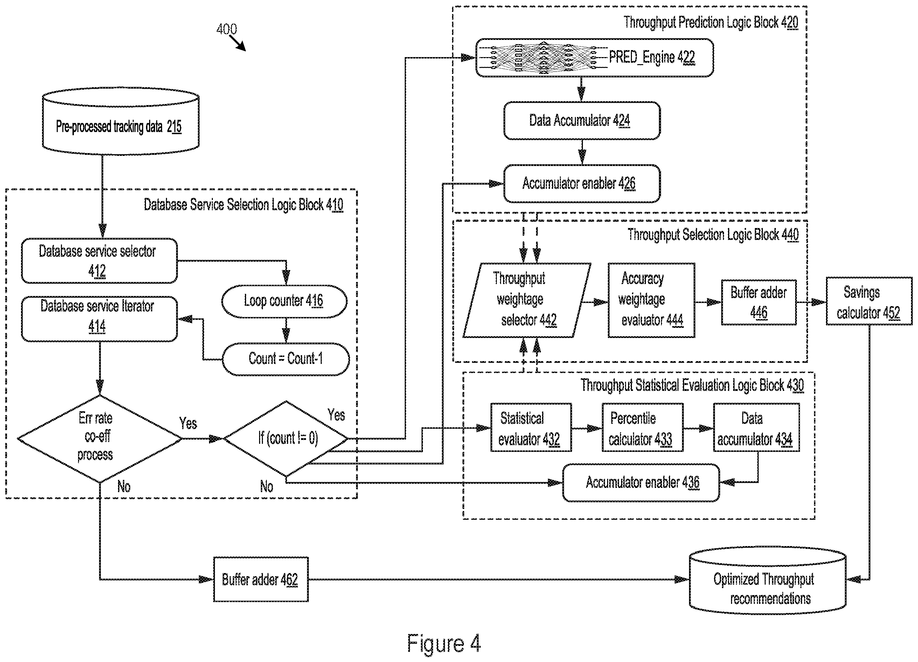

At the prescriptive engine layer 250, the TOL 300 may analyze the database service to generate throughput optimization recommendations. Figure 4 is a block diagram example of a system 400 illustrating execution implementation for the prescriptive engine layer 250 of the TPO stack 200. Example operation of the TOL 300 at the prescriptive engine layer 250 will be described with reference to the system 400 of Figure 4.

The execution of the system 400 may include a database service selection logic block 410, a throughput prediction logic block 420, a throughput statistical evaluation logic block 430, and a throughput selection logic block 440. The database service selection logic block 410 may include a database service selector 412, a database service iterator 414, and a loop counter 416. The throughput prediction logic block 420 may include a prediction engine 422, a data accumulator 424, and an accumulator enabler 426. The throughput statistical evaluation logic block 430 may include a statistical evaluator 432, a percentile calculator 433, a data accumulator 434, and an accumulator enabler 436. The throughput selection logic block 440 may include a throughput weightage selector 442, an accuracy weightage evaluator 444, and a buffer adder 446.

At the database service selection logic block 410, the TOL 300 may select target database services from candidate database services based on the pre-processed utilization tracking data 215 of the candidate database services (311).

In an implementation, at the database service selector 412, the TOL 300 may obtain a utilization time length for a candidate database service and a utilization data missing coefficient for the candidate database service via the data-staging layer 205. The utilization time length may be represented by days and the utilization data missing coefficient may represent the percentage of days for which the utilization data is missing over the utilization time length. Then, the TOL 300 may select the candidate database service as a target database service for throughput optimization if the utilization time length is greater than or equal to a utilization time length threshold and the utilization data missing coefficient is less than a data missing tolerance threshold. The utilization time length threshold may range, for example, from 30 days to 90 days.

For example, the utilization time length threshold is 90 days and the data missing tolerance threshold is 10%. If a database service has 90 days of utilization but only has 83 days of utilization tracking data, i.e., 7 days of utilization tracking data is missing, the utilization tracking data missing coefficient of the database service is 7.8% (i.e., 7/90). Because the utilization time length of the database service (90 days) is equal to the utilization time length threshold (90 days) and the utilization data missing coefficient of the database service (7.8%) is less than the data missing tolerance threshold (10%), the TOL 300 may select the database service as a target database service for subsequent throughput optimization analysis.

After processing the candidate database service at the database service selector 312, the TOL 300 may, at the loop counter 416, count the remained candidate database services that have yet to be processed. If the count value is greater than zero, the TOL 300 may iterate the database service selection operation at the database service iterator 414 to select target database services until all the candidate database services have been processed. Optionally, if a candidate database service is not selected as one of the target database services, the TOL 300 may add a predetermined buffer to the provisioned throughput of the candidate database service at the buffer adder 462 and take the buffered provisioned throughput as a recommended throughput of the candidate database service.

At the throughput prediction logic block 420, the TOL 300 may obtain consumed throughputs of the target database service for each unit time from the pre-processed utilization tracking data 215 via the data-staging layer 205 (312). The unit time may be, for example, second, minute, and hour. The TOL 300 then may predict prediction-based throughput over a next TPO interval for the target database service selected at the database service selection logic block 410 based on the consumed throughputs (314). The prediction engine 422 may include a deep machine learning model trained to predict the database service throughputs for individual target database services. The deep machine learning model may be recurrent neural network (RNN) such as a long short-term memory (LSTM) network.

A LSTM network may include multiple LSTM units. In contrast to an ordinary RNN unit only including an input gate and an output gate, the LSTM unit may include more elements, such as a cell, an input gate, an output gate and a forget gate. The cell may maintain information in memory for long period of time. The three gates regulate the flow of information into and out of the cell. Such deep learning architecture may help learn longer-term dependencies among input data.

The throughputs may be predicted on the basis of a predetermined time granularity. For example, if the predetermined time granularity is hourly, the TOL 300 may predict throughputs for each hour in the next TPO interval. If the predetermined time granularity is six-hour, the TOL 300 may predict the throughputs for each six-hour in the next TPO interval. In some implementations, the throughput with the maximum throughput value among all the predicted throughputs of each hour/six-hour in the next TPO interval may be taken as the prediction-based throughput for the database service over the next TPO interval.

The TOL 300 may output prediction-based throughput results for the individual target database services to the data accumulator 424. At the accumulator enabler 426, the TOL 300 may monitor if all of the target database services have been predicted at the throughput prediction logic block 420.

Referring to the throughput statistical evaluation logic block 430, the TOL 300 may obtain consumed throughputs for each unit time from the pre-processed utilization tracking data 215 via the data-staging layer 205. The unit time may be, for example, second, minute, and hour. Then, the TOL 300 may select target consumed throughputs from the consumed throughputs on the basis of the predetermined time granularity at the statistical evaluator 432 (315). Each of the target consumed throughputs may have a maximum consumed throughput value among consumed throughputs within respective time intervals with the predetermined time granularity.

As an example, the unit time is minute and the consumed throughputs are thus obtained per minutes. Where the time granularity to select target consumed throughputs is hour, there are 60 consumed throughputs within the time granularity. The TOL 300 may identify a consumed throughput having the maximum throughput value among the 60 consumed throughputs and take this consumed throughput as the target consumed throughput for the hour.

Subsequently, the TOL 300 may determine a statistical throughput consumption value from the target consumed throughputs (316). In an implementation, the statistical throughput consumption value is greater than consumed throughput values of a predetermined portion of the target consumed throughputs. For example, the TOL 300 may determine the statistical throughput consumption value as a Nth percentile consumed throughput value of the target consumed throughputs and calculate the Nth percentile consumed throughput value at the percentile calculator 436. In some implementations, the Nth percentile is greater than or equal to 95th percentile. Here, the percentile value of the target consumed throughputs may present deeper insights into the distribution of the utilization curve of the database service as opposed to the average value of the target consumed throughputs.

For example, a database service is considered under-utilized when the provisioned throughput for the user contracting for the database service is higher than the throughput actually consumed by the user. As such, the TOL 300 may need to downsize the provisioned throughput. In the example, historical consumed throughputs of the database service reveal that 95% of the consumed throughputs are 10 RUs while 5% of the consumed throughputs are 100 RUs. As such, the 95th percentile consumed throughput value is 10 RUs, which is less than the averaged consumed throughput value 14.5 RUs. Thus, the resulting provisioned throughput downsized based on the 95th percentile value may be less than the resulting provisioned throughput downsized based on the averaged value. That said, percentile statistics may help downsize the provisioned throughput more than average statistics. This may help improve the overall utilization of the database service. For another example, the database service may have unacceptably high consumed throughputs, i.e., outliers. Such outliers may be identified only through a higher percentile calculation, for example, when the outliers are in the 98th or 99th percentile of consumed throughputs. Thus, in order to take into account the outliers, the throughput optimization analysis needs to introduce percentile statistics.

After determining the statistical throughput consumption value, the TOL 300 may calculate the statistics-based throughput over the TPO interval for the target database service based on the statistical throughput consumption value (317). For example, the TOL 300 may calculate a 99th percentile consumed throughput value from the target consumed throughputs and calculate the statistics-based throughput as equal to the 99th percentile consumed throughput value. For another example, the TOL 300 may calculate the statistics-based throughput as equal to the statistical throughput consumption value plus a predetermined percentage buffer.

The TOL 300 may output the statistics-based throughput results for individual target database services to the data accumulator 434. At the accumulator enabler 436, the TOL 300 may monitor if all of the target database services have been evaluated at the throughput statistical evaluation logic block 430.

At the throughput selection logic block 440, the TOL 300 may extract database service performance metric data for each unit time from the pre-processed utilization tracking data 215 via the data-staging layer 205 (318) and select target performance metric data from the database service performance metric data based on the predetermined time granularity (319). For example, each of the target performance metric data has a maximum performance metric value among database service performance metric data within respective time intervals with the predetermined time granularity.

The database service performance metric data includes the rate limited request records, the error rate records, and the throughput failed request records. Accordingly, the TOL 300 may select target rate limited request records from the rate limited request records. Each of the target rate limited request records has a maximum rate limited request value among rate limited request within respective time intervals with the predetermined time granularity. The TOL 300 may select target error rate records from the error rate records. Each of the target error rate records has a maximum error rate value among error rate records within respective time intervals with the predetermined time granularity. The TOL 300 may select target throughput failed request records from the throughput failed request records. Each of the target throughput failed request records has a maximum throughput failed request value among throughput failed request records within respective time intervals with the predetermined time granularity.

Then, the TOL 300 may determine a statistical performance metric value from the target performance metric data at the throughput weightage selector 442 (320). The statistical performance metric value may be greater than performance metric values of a predetermined portion of the target performance metric data. For example, the TOL 300 may determine the statistical performance metric value as a Nth percentile performance metric values of the target performance metric data. In an implementation, the Nth percentile may be greater than or equal to a 95th percentile.

The TOL 300 determines the target rate limited request value as a Nth percentile rate limited request value of the target rate limited request records. The TOL 300 determines the target error rate value as a Nth percentile error rate value of the target error rate records. The TOL 300 may determines the target throughput failed request value as a Nth percentile rate limited request value of the target throughput failed request records.

In the example, the TOL 300 may respectively calculate a 99th percentile rate limited request value, a 99th percentile error rate value, a 99th percentile throughput failed request value. Take calculating 99th percentile rate limited request value as example, the TOL 300 may obtain historical rate limited request records of the database service for each unit time from the pre-processed utilization tracking data 215, for example, via the data-staging layer 205. The unit time may be, for example, second, minute, and hour. Then, the TOL 300 may select target rate limited request records from the historical rate limited request records on the basis of the predetermined time granularity. Each of the target rate limited request records may have a maximum rate limited request value among the historical rate limited request records within respective time intervals with the predetermined time granularity. The rate limited request value may represent the number of rate limited requests recorded within a rate limited request record.

In an example, the unit time is minute and the rate limited request records are thus obtained per minute. Where the time granularity to select target rate limited request records is a specific hour, there will be 60 rate limited request records within the time granularity. The TOL 300 may identify a rate limited request record having the maximum rate limited request value among the 60 rate limited request records and take the identified rate limited request record as the target rate limited request record for the hour. For instance, within a specific hour, the 60 rate limited request records indicate that there are 2 rate limited requests in each of the first 59 minutes and there are 3 rate limited requests in the 60th minute. As such, the rate limited request record of the 60th minute would be identified as the target rate limited request record for the specific hour.

Subsequent to obtaining the target rate limited request records, the TOL 300 may calculate a 99th percentile rate limited request value from the target rate limited request records. For example, among 100 target rate limited request records, the rate limited request values out of 99 target rate limited request records are less than or equal to 2. Then, the 99th percentile rate limited request value would be 2.

The 99th percentile error rate value and the 99th percentile throughput failed request value can be calculated in the similar way. With respect to calculating the 99th percentile throughput failed request value, the TOL 300 may obtain historical throughput failed request records of the database service for each unit time from the pre-processed utilization tracking data 215, for example, via the data-staging layer 205. Then, the TOL 300 may select target throughput failed request records from the historical throughput failed request records on the basis of the predetermined time granularity. Each of the target throughput failed request records has a maximum throughput failed request value among the historical throughput failed request records within respective time intervals with the predetermined time granularity. The throughput failed request value may represent the number of the throughput failed requests recorded within a throughput failed request record. Subsequently, the TOL 300 may calculate the 99th percentile throughput failed request value from the target throughput failed request records. Alternatively, the TOL 300 may calculate a throughput failure ratio as the 99th percentile throughput failed request value divided by the 99th percentile consumed throughput value.

With respect to calculating the 99th percentile error rate value, the TOL 300 may obtain historical error rate records of the database service for each unit time from the pre-processed utilization tracking data 215, for example, via the data-staging layer 205. Then, the TOL 300 may select target error rate records from the historical error rate records on the basis of the predetermined time granularity. Each of the target error rate records has a maximum error rate value among the historical error rate records within respective time intervals with the predetermined time granularity. The error rate value may represent the number of the errors recorded within an error rate record. Subsequently, the TOL 300 may calculate a 99th percentile error rate value from the target error rate records. Alternatively, the TOL 300 may calculate an error rate ratio as the 99th percentile error rate value divided by the 99th percentile consumed throughput value.

At the accuracy weightage evaluator 444, the TOL 300 may evaluate the prediction accuracy of the prediction engine 422 (322). For example, the TOL 300 may input a sample utilization tracking data to the prediction engine 422, execute the prediction engine 422 to output a prediction result based on the sample utilization tracking data, and then compare the prediction result with an expected result to determine the prediction accuracy of the prediction engine 422.

The TOL 300 then may select one of the prediction-based throughput obtained at the throughput prediction logic block 420 and the statistics-based throughput obtained at the throughput statistical evaluation logic block 430 as a recommended throughput based on the statistical performance metric value and the performance metric threshold. Where the statistical performance metric value is the 99th percentile rate limited request value, the performance metric threshold may be a rate limited request threshold. Where the statistical performance metric value is the 99th percentile error rate value, the performance metric threshold may be an error rate threshold. Where the statistical performance metric value is the 99th percentile throughput failed request value, the performance metric threshold may be a throughput failed request threshold. In an implementation, the TOL 300 may configure the rate limited request threshold, the throughput failed request threshold, and the error rate threshold at the configuration layer 220 as discussed above.

In an example, upon obtaining the 99th percentile rate limited request value, the 99th percentile error rate value, the 99th percentile throughput failed request value, and the prediction accuracy, the TOL 300 may compare these metric values with corresponding preconfigured metric thresholds including the rate limited request threshold, the error rate threshold, the throughput failed request threshold, and the prediction accuracy.

Where the 99th percentile rate limited request value is less than or equal to the rate limited request threshold, the 99th percentile error rate value is less than or equal to the error rate threshold, the 99th percentile throughput failed request value is less than or equal to the throughput failed request threshold, and the prediction accuracy is greater than an accuracy threshold, the TOL 300 may determine the prediction-based throughput obtained at the throughput prediction logic block 420 as the recommended throughput for the database service. By contrast, where the 99th percentile rate limited request value is less than or equal to the rate limited request threshold, the 99th percentile error rate value is less than or equal to the error rate threshold, the 99th percentile throughput failed request value is less than or equal to the throughput failed request threshold, and the prediction accuracy is less than or equal to the accuracy threshold, the TOL 300 may determine statistics-based throughput obtained at the throughput statistical evaluation logic block 430 as the recommended throughput for the database service.

Alternatively or additionally, the TOL 300 may determine the recommended throughout for the database service based on the 99th percentile rate limited request value, the throughput failure ratio, the error rate ratio, and the prediction accuracy. For example, where the 99th percentile rate limited request value is less than or equal to the rate limited request threshold, e.g., 2, the error rate ratio is less than or equal to an error rate ratio threshold, e.g., 5%, the throughput failure ratio is less than or equal to the throughput failed request threshold, e.g. 5%, and the prediction accuracy is greater than the accuracy threshold, e.g. 85%, the TOL 300 may determine the prediction-based throughput obtained at the throughput prediction logic block 420 as the recommended throughput for the database service. Where the 99th percentile rate limited request value is less than or equal to the rate limited request threshold, the error rate ratio is less than or equal to the error rate ratio threshold, the throughput failure ratio is less than or equal to the throughput failure ratio threshold, and the prediction accuracy is less than or equal to the accuracy threshold, the TOL 300 may determine statistics-based throughput obtained at the throughput statistical evaluation logic block 430 as the recommended throughput for the database service.

Optionally, where neither the prediction-based throughput nor the statistics-based throughput is determined as the recommended throughput, the TOL 300 may calculate an average provisioned throughput from the provisioned throughputs, for example, in the past 90 days. Then, the TOL 300 may add a provisioned buffer to the average provisioned throughput to obtain a buffered provisioned throughput. For example, the provisioned buffer is a predetermined percentage, such as 10%, of the average provisioned throughput. As such, the TOL 300 may determine the buffered provisioned throughput as the recommended throughput.

Likewise, the TOL 300 may add a throughput buffer to the prediction-based throughput/the statistics-based throughput as the recommended throughput at the buffer adder 446. In an implementation, the TOL 300 may select target provisioned throughputs from the provisioned throughputs based on a predetermined time granularity. Each of the target provisioned throughputs has a maximum provisioned throughput value among provisioned throughputs within respective time intervals with the predetermined time granularity. Here, the target provisioned throughput selection is similar to the target consumed throughput selection at the statistical evaluator 422. As an example, the unit time is minute and thus the provisioned throughputs are obtained per minute. Where the time granularity to select target provisioned throughputs is hour, there are 60 provisioned throughputs within the time granularity. The TOL 300 may identify a provisioned throughput having the maximum throughput value among the 60 provisioned throughputs and take this provisioned throughput as the target provisioned throughput for the hour.

The TOL 300 may calculate, for example, a 99th percentile provisioned throughput value from the target provisioned throughputs, which is similar to calculating the 99th percentile consumed throughput value at percentile calculator 433. Next, the TOL 300 may calculate a throughput consumption ratio based on the 99th percentile provisioned throughput value and the 99th percentile consumed throughput value. For example, the throughput consumption ratio is calculated as the 99th percentile provisioned throughput value divided by the 99th percentile consumed throughput value.

The TOL 300 may determine the throughput buffer to be added for the prediction-based throughput/the statistics-based throughput based on the throughput consumption ratio. In an implementation, if the throughput consumption ratio is less than or equal to a predetermined throughput consumption threshold $\pi$, e.g., $1 < \pi < 1.1$, the TOL 300 may add a higher buffer percentage, e.g., 10%, to the prediction-based throughput/the statistics-based throughput. Otherwise, the TOL 300 may add a lower buffer percentage, e.g., 5%, to the prediction-based throughput/the statistics-based throughput.

Optionally, the execution environment 400 may further include a savings calculator 452. At the savings calculator 452, the TOL 300 may generate a consumption optimization preview for the database service based on the recommended throughput, the average provisioned throughput, a provisioned database service storage volume of the database service, an actually used database service storage volume of the database service, a number of regions in which the database service is distributed, and consumption metrics data for the database service. The consumption optimization preview may demonstrate potential cost savings because of the recommended throughput optimization. The TOL 300 may obtain the provisioned database service storage volume of the database service, the actually used database service storage volume of the database service, the number of regions of the database service, for example, at the input layer 210 via data staging layer 205.

For example, the TOL 300 may calculate the pre-optimization cost of the provisioned throughputs and the post-optimization cost of the recommended throughput, and thereby obtaining the potential savings benefiting from the recommended throughput optimization by subtracting the post-optimization cost from the pre-optimization cost. When calculating the pre-optimization cost, the provisioned throughputs may be represented by the average provisioned throughput. As such, the potentially saved throughput would be the recommended throughput minus the average provisioned throughput. The TOL 300 may calculate the potential savings based on the potentially saved throughputs.

Optionally, the provisioned database service storage volume on the database service may be downsized to a recommended database service storage volume. For example, the TOL 300 may calculate a database service storage volume usage ratio by dividing the provisioned database service storage volume by actually consumed database service storage volume. If the database service storage volume usage ratio is greater than or equal to a predetermined usage ratio threshold, e.g., 1.5, the recommended database service storage volume may be determined as actually consumed database service storage volume plus a percentage buffer, e.g., 10% buffer. Otherwise, the provisioned database service storage volume may not be downsized. If the provisioned database service storage volume of the database service is downsized, the potential cost savings due to database service storage volume downsizing may be included to the consumption optimization preview.

Generally, the more the potential savings are, the higher priority that the database service should be optimized. For example, for the database services undergoing the throughput optimization analysis, the TOL 300 may sort their potential savings in descending order and calculate cumulative saving percentages incrementally for each of the database services in the descending order.

As an example, if the cumulative savings percentage for a database service is less than or equal to 65%, the optimization priority for the database service is set to be high. If the cumulative savings percentage for a database service is less than or equal to 85% but greater than 65%, the optimization priority for the database service is set to be medium. If the cumulative savings percentage for a database service is greater than 85%, the optimization priority for the database service is set to be low.

For purpose of illustration, the TOL 300 may execute the example routines in Table 1 to implement functions of the prescriptive engine layer 250 in individual modules of the execution environment 400.

| Table 1: Example Routine for prescribing throughput optimization | |
|---|---|
| | Description |
| Example Routine | **Algorithm formula:**<br><br>**Equation 1a** - Predicted Throughputs<br>$€ = $ If $[(\lambda(t) <= \delta)$ AND $(\zeta(t) <= \chi)$ AND $(\psi(t) <= \rho)$ AND $(\sigma > \varkappa)]$, THEN $\Omega$ ELSE т<br>$\Omega = $ If $(\alpha <= \pi,$ THEN $[(\gamma(n) + \gamma(n)*\varrho)]$ ELSE $[(\gamma(n) + \gamma(n)*\beta)])$<br><br>**Equation 1b** - Statistical Throughputs<br>$€ = $ If $[(\lambda(t) <= \delta)$ AND $(\zeta(t) <= \chi)$ AND $(\psi(t) <= \rho)$ AND $(\sigma <= \varkappa)]$, THEN $\Omega$ ELSE т<br>$\Omega = $ If $(\alpha <= \pi,$ THEN $[(\varepsilon(t) + \varepsilon(t)* \varphi)]$ ELSE $[(\varepsilon(t) + \varepsilon(t)* \sigma)])$<br><br>*where,*<br>*$€ = $ Throughput Provisioning Condition*<br>*$\tau = \xi(t) + \xi(t)* \Phi (\tau$ would be iteratively increased until $\lambda(t), \zeta(t)$ and $(\psi(t)$ are within the thresholds)*<br>*$\xi(t) = $ Average Provisioned Throughput for the past "t" days*<br>*$\Omega = $ Throughput Provisioning Magnitude*<br>*$\alpha = $ Throughput Consumption Ratio $= \omega(t)/\varepsilon(t)$*<br>*$\omega(t) = $ 99th percentile of the provisioned throughput for the past "t" days*<br>*$\varepsilon(t) = $ 99th percentile of the consumed throughput for the past "t" days*<br>*$\Phi = $ Higher Buffer (~10%) & $\sigma = $ Lower Buffer (~5%)*<br>*$\pi = $ Throughput consumption threshold, e.g., 1< $\pi$ < 1.1*<br>*$\gamma(n) = $ Predicted Throughput for the next "n" days*<br><br>*$\varrho = $ Higher Buffer on Predicted Throughput*<br>*$\beta = $ Lower Buffer on Predicted Throughput*<br>*$\lambda(t) = $ 99th percentile of "Rate Limited Requests" for the past "t" days*<br>*$\delta = $ Threshold for $\lambda(t)$ such that $\delta < \gamma$ (Typically $\gamma = 2$)*<br>*$\zeta(t) = $ 99th percentile of "Throughput Failed Requests" for the past "t" days*<br>*$x = $ Threshold for $\zeta(t)$ such that $x < \Sigma$ (Typically $\Sigma = 5\%$)*<br>*$\Sigma = $ As a percentage of "Consumed Requests for the past t days"*<br>*$\psi(t) = $ 99th percentile of "Error Rate" for the past "t" days* |

(continued)

| Table 1: Example Routine for prescribing throughput optimization |
|---|
| Description |
| $\rho$ = Threshold for $\psi(t)$ such that $\rho < \theta$ (Typically $\theta = 5\%$)<br>$\theta$ = As a percentage of "Consumed Requests for the past t days"<br><br>$\eth$ = Prediction Accuracy of the Deep Learning Algorithm on the Test Data<br><br>$\varkappa$ = Business Relevant Cut-Off (Usually 85%)<br><br>**Savings Calculator:**<br><br>$$\text{Cost Savings} = \mho * Y * ((\xi(t) - \Omega)/100) + (((A-B)*C)*X)$$<br><br>Where,<br><br>$\mho$ = Price/100 RUs for single/multiple regions<br><br>Y = Number of hours in the current month<br>$\xi(t)$ = Average Provisioned Throughput for the past "t" days<br>$\Omega$ = Throughput Provisioning Magnitude<br>A = Provisioned Volume<br>B = Recommended Volume<br>C = Storage Cost/GB (typically $0.25 per month)<br>X = Number of Regions<br><br>Note: $\mho$ = IF(X>1, (X+1)*ø, $\acute{\varepsilon}$)<br>Where: ø = $0.016 and $\acute{\varepsilon}$ = $0.008<br>B = (IF (A/Z)>=1.5 (Z + Z*0. 1) ELSE A)<br>Where: Z = Actual Volume Used (GB) |

Optionally, upon determining to execute a throughput optimization for the database service, the TOL 300 may output its optimization recommendations as a TPO token 252. The prescriptive engine layer 250 may send the TPO token 252 to a host interface for management of the database services. For example, the TPO token may, for example, include a logic rightsizing the throughput provisioned for the target database service. The host interface may include an Application Programming Interface (API) for rightsizing the provisioned throughput for a database service and execute the TPO token with the API to right size the throughput provisioned for the target database service.

Optionally, the TOL 300 may execute the similar operations at the prescriptive engine layer 250 to output respective throughput optimization recommendations for each of the database services undergoing the throughput optimization analysis. Upon the throughput optimization recommendations are output, the TOL 300 then may, at the prescriptive engine layer 250, store the throughput optimization recommendations via a memory operation at the data staging layer 205 (326).

Now referring to the presentation layer 260 in Figure 2, where the TOL 300 may access the optimization recommendations from the prescriptive engine layer 250, e.g., via data staging layer 205 memory operations to generate a TPO-control interface 266 including a TPO-window presentation 268 (328).

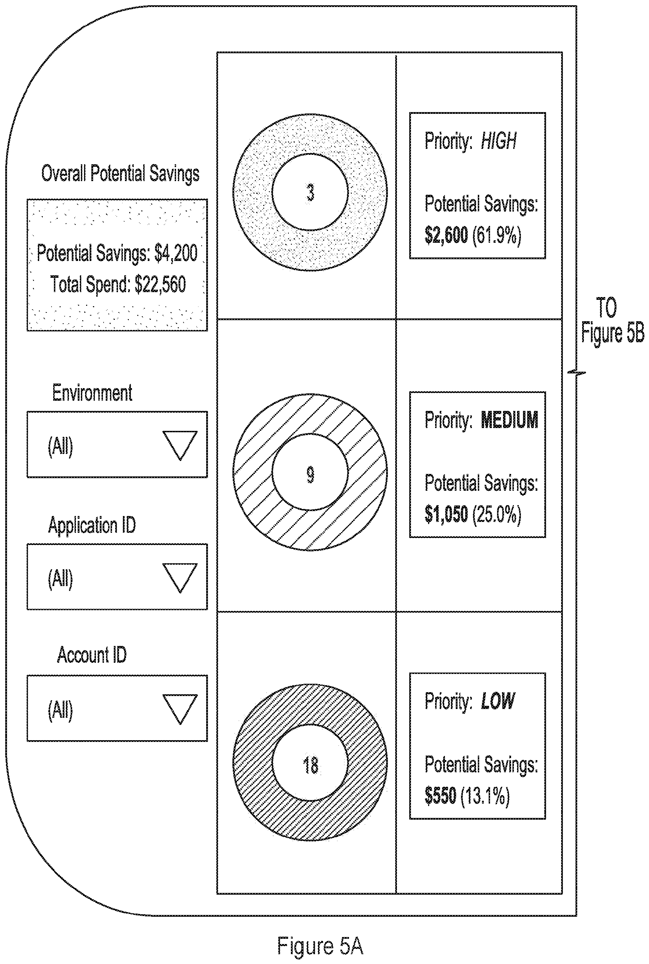

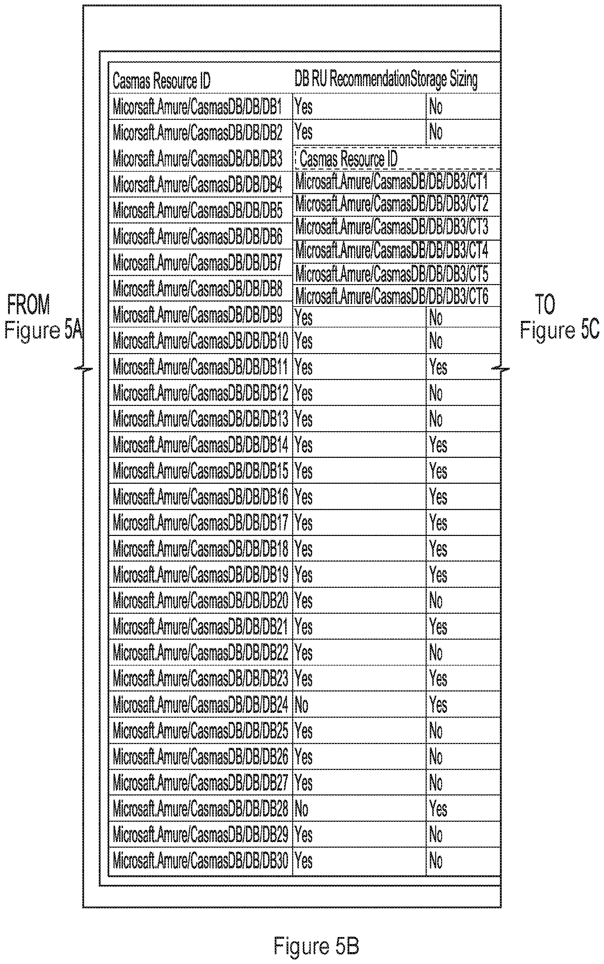

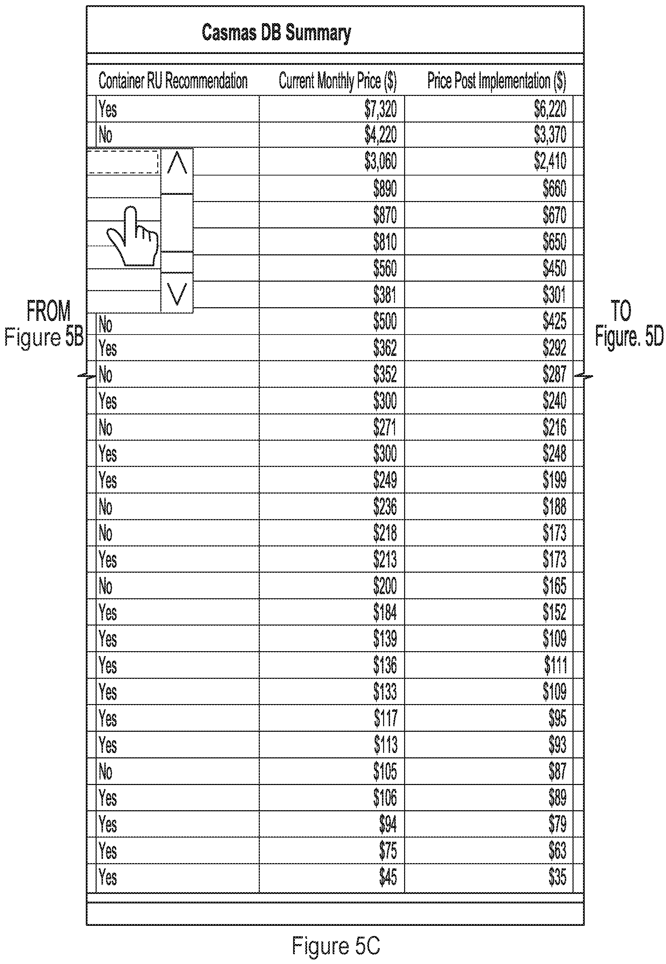

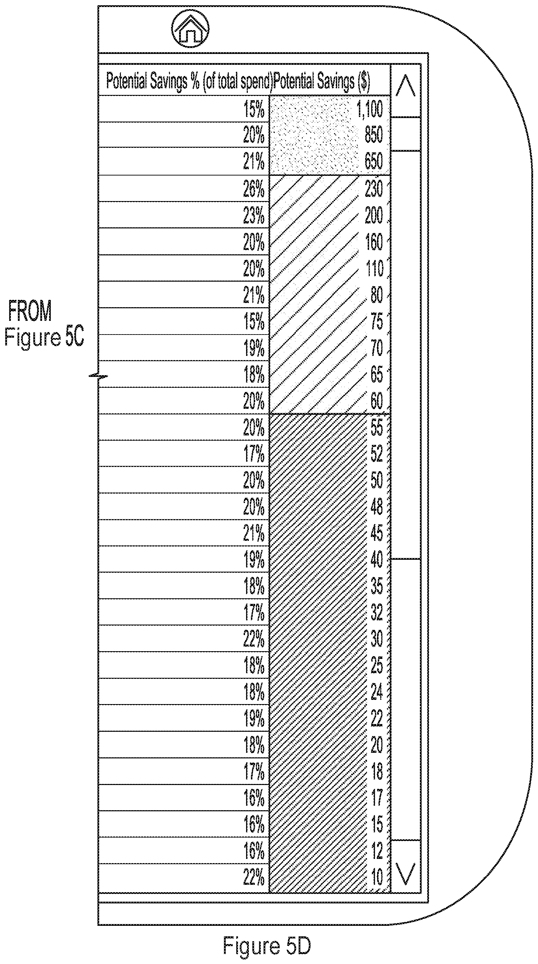

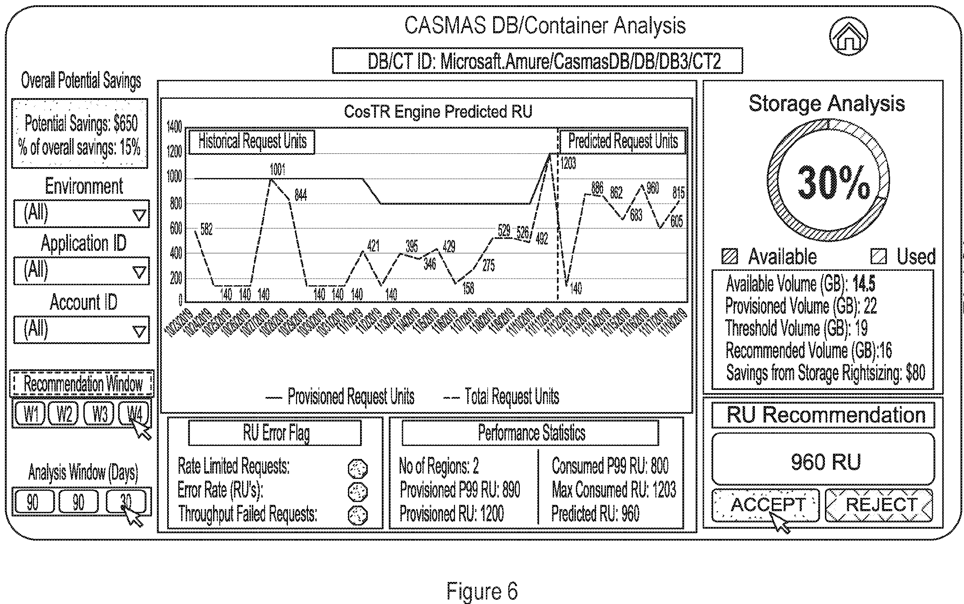

The TPO-window presentation 268 may include data and/or selectable options related to the optimization recommendations. In an implementation, the TPO-window presentation 268 may be configured to display prescriptive analysis information with regard to the throughput optimization. For example, Figures 5A-5D illustrate an example of the throughput optimization analysis preview by database service including, for example, the database/container throughput recommendation and potential savings. It may also illustrate the throughput optimization priority for the database services in accordance with their potential savings. Figure 6 illustrates an example of a detailed throughput optimization analysis for a specific database including, for example, the historical provisioned/consumed throughputs, the predicted throughputs preview for the database, the provisioned/recommended database service storage volume of the database, and the optimization recommendations for this database.

Further, an option to forward a TPO token, to a host interface for throughput rightsizing in accord the recommendations may be included as one of the selectable options available through the TPO-window presentation 268. Alternatively or additionally, an option to configure the TPO interval and the time length of the utilization tracking data 212 used for the throughput optimization analysis may be included as a portion of the selectable options available through the TPO-window, as illustrated in Figure 6. Additionally or alternatively, the TPO-window presentation 268 may include options for the operator to input various performance metric thresholds.

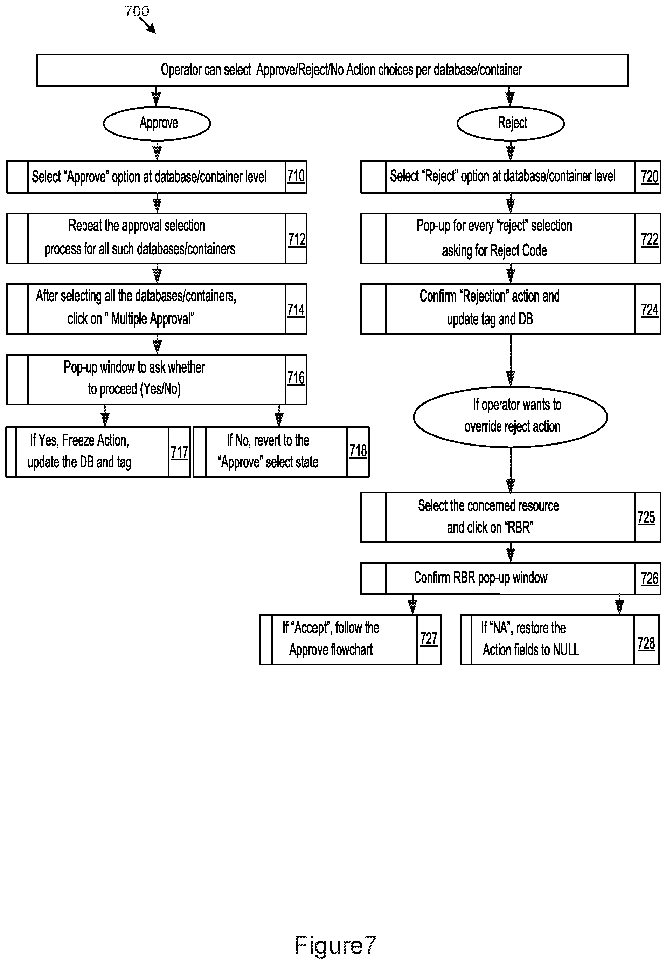

Additionally or alternatively, the TPO-window presentation may include an option to approve/reject one or more (or all of) the throughput optimization recommendations. Figure 7 shows an example interaction logic between the operator and the TPO-window presentation 268 to approve/reject the displayed optimization recommendations. Specifically, the operator may take approval/rejection action per database service in the TPO-window presentation 268.

For example, the TPO-window presentation 268 may include "Approve," "Reject," and "No action" options for each of the databases/containers. The operator may select "Approve" option at database/container level (710) and repeat the "Approve" selection for other databases/containers (712). After finishing the option selections for all the databases/containers, the operator may click on "Multiple Approval" option (714). As response, the TPO-window presentation 268 may pop-up a window to ask the operator to confirm to proceed with "Yes" and/or "No" options (716). If the operator selects "Yes" option, the TPO-window presentation 268 may freeze action in the window and update the operator's inputs in the background storage storing the inputs (717). If the operator selects "No" option, the TPO-window presentation 268 may revert to the "Approve" selection state (718).

The operator may also select "Reject" option at database/container level (720). For each "Reject" selection, the TPO-window presentation 268 may pop up a window to ask for a rejection code justifying the rejection (722). Where the rejection code is verified, the TPO-window presentation 268 may confirm the rejection action and update the operator's inputs in the background database service (724).

Optionally, if the operator would like to override his/her previous rejection action, the operator may select the concerned database services and click "RBR" option (725). As response, the TPO-window presentation 268 may pop up a window to confirm the "RBR" selection with "Accept" and "NA" options (726). If the operator selects "Accept" option, the TPO-window presentation 268 may enable to select the "Approve" option for the concerned database services (727). If the operator selects "NA", the TPO-window presentation 268 may nullify all the selection actions with respect to the concerned database services (728).

Through the interaction with the operator via the TPO-control interface, the TOL 300 may perform a throughput determination on whether to execute, based on the recommended throughput, a throughput optimization for the target database service (329). Where the TOL 300 determines to execute the throughput optimization, the TOL 300 may generate a TPO token 252 based on the recommended throughput (330). The TPO token may, for example, include a logic rightsizing the throughput provisioned for the target database service.

Optionally, similar to the throughput determination, the TOL 300 may perform a storage volume determination on whether to execute a storage volume optimization for the target NoSQL database service based on the recommended database service storage volume. Where the TOL 300 determines to execute the storage volume optimization, the TOL 300 may generate the TPO token 252 based on both the recommended throughput and the recommended database service storage volume. The TPO token may, for example, include a logic right sizing both the throughput and the storage volume provided for the target database service.

After generation of the TPO token 252, the TOL 300 may initiate deployment of the TPO token 252 by causing network interface circuitry (e.g., the communication interfaces 812) to send the TPO token 252 to a host interface for throughput optimization (332). For example, services such as Amazon® Web Services (AWS), Cloudian®, Microsoft® Azure, or other cloud computing services, may maintain host interfaces (e.g., web interfaces, application programming interfaces, or other interfaces) by which cloud user/system operator may manage the database services.

In some cases, the TOL 300 may initiate deployment via the data export layer 270. The data export layer 270 may format the reservation matrix in one or more formats for transfer. For example, the data export layer 270 may support format translation to java script object notation (JSON), extensible markup language (XML), comma separated value (CSV), Tableau Workbook (TBWX), hypertext markup language (HTML) or other formats. The data export layer 270 may also support transfer of the TPO token in one or more states, such as flat file transfers, streaming transfers, web service access, internet protocol transfers, or other transfers. Additionally or alternatively, the TOL 300 may initiate deployment via the prescriptive engine layer 250 through direct transfer, direct network access, or other non-export transfer.

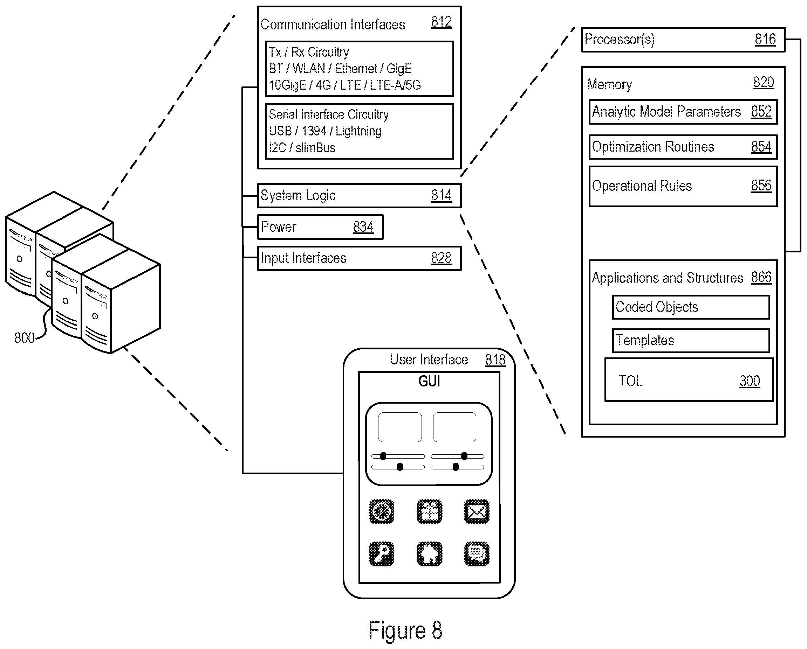

Figure 8 shows an example system execution environment 800 for the TPO stack 200 described above. The execution environment 800 may include system logic 814 to support execution of the multiple layers of TPO stack 200 described above. The system logic may include processors 816, memory 820, and/or other circuitry.

The memory 820 may include analytic model parameters 852, optimization routines 854, and operational rules 856. The memory 820 may further include applications and structures 866, for example, coded objects, machine instructions, templates, or other structures to support pre-processing the utilization tracking data, predicting database service throughputs, evaluating statistical database service throughputs, or other tasks described above. The applications and structures may implement the TOL 300.

The execution environment 800 may also include communication interfaces 812, which may support wireless, e.g. Bluetooth, Wi-Fi, WLAN, cellular (4G, LTE/A, 5G), and/or wired, Ethernet, Gigabit Ethernet, optical networking protocols. The communication interfaces 812 may also include serial interfaces, such as universal serial bus (USB), serial ATA, IEEE 1394, lighting port, $I^2C$, slimBus, or other serial interfaces. The communication interfaces 812 may be used to support and/or implement remote operation of the TPO-control interface 266. The execution environment 800 may include power functions 834 and various input interfaces 828. The execution environment may also include a user interface 818 that may include human-to-machine interface devices and/or graphical user interfaces (GUI). The user interface 818 may be used to support and/or implement local operation of the TPO-control interface 266. In various implementations, the system logic 814 may be distributed over one or more physical servers, be implemented as one or more virtual machines, be implemented in container environments such as Cloud Foundry or Docker, and/or be implemented in Serverless (functions as-a-Service) environments.

In some cases, the execution environment 800 may be a specially defined computational system deployed in a cloud platform. In some cases, the parameters defining the execution environment may be specified in a manifest for cloud deployment. The manifest may be used by an operator to requisition cloud based hardware resources, and then deploy the software components, for example, the TPO stack 200, of the execution environment onto the hardware resources. In some cases, a manifest may be stored as a preference file such as a YAML (yet another mark-up language), JSON, or other preference file type. Additionally or alternatively, the manifest may include custom scripts to implement the TPO stack 200 in a serverless environment, for example, using the multiple-tier multiple-node serverless framework described in U.S. Patent Application No. 16/159,399, filed 12 October 2018, bearing Attorney Docket No. 15718-485, and entitled Distributed Multiple Tier Multi-Node Serverless Framework for Complex Analytics Task Execution. Therein, a multiple-tier framework is described. The framework describes a series of the serverless tasks controlled via scripts. The serverless tasks overlap in execution to maintain continuity across the tasks. The computational task in divided into chunks that may be handled by individual serverless tasks. Accordingly, a complex analytic process, such as those describe in this disclosure, may be divided into chunks and executed over one or more overlapping serverless tasks.

The methods, devices, processing, circuitry, and logic described above may be implemented in many different ways and in many different combinations of hardware and software. For example, all or parts of the system, including the network interface circuitry and the optimization circuitry, may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible database service medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HDD), or other magnetic or optical disk; or in or on another machine-readable medium. A product, such as a computer program product, may include a database service medium and instructions stored in or on the medium, and the instructions when executed by the circuitry in a device may cause the device to implement any of the processing described above or illustrated in the drawings.

Implementations of the system may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

**Claims**

1. A system (100) comprising:

    network interface circuitry (110) configured to:

receive (302) utilization tracking data for a target NoSQL database service provisioned with provisioned throughputs, a provisioned throughput representing a capacity of the target NoSQL database service to process data per unit time; and

send (332) a throughput optimization (TPO) token to a host interface (130), the host interface configured to execute the TPO token to provision the target NoSQL database service with a recommended throughput;

optimization circuitry (120) in data communication with the network interface circuitry, the optimization circuitry configured to execute a TPO stack (122), the TPO stack executable to:

at a prescriptive engine layer (250) of the TPO stack:

obtain (312) consumed throughputs for each unit time from the utilization tracking data;

predict (314), based on the consumed throughputs, a prediction-based throughput over a TPO interval for the target NoSQL database service with a prediction engine;

select (315) target consumed throughputs from the consumed throughputs based on a predetermined time granularity;

determine (316) a statistical throughput consumption value from the target consumed throughputs, wherein the statistical throughput consumption value is greater than consumed throughput values of a predetermined portion of the target consumed throughputs;

calculate (317) a statistics-based throughput over the TPO interval for the target NoSQL database service based on the statistical throughput consumption value;

extract (318) database service performance metric data for each unit time from the utilization tracking data;

select (319) target performance metric data from the database service performance metric data based on the predetermined time granularity, wherein the target performance metric data comprises rate limited request records, error rate records, and throughput failed request records;

calculate (320) a Nth percentile rate limited request value from the rate limited request records, a Nth percentile error rate value from the error rate records, and a Nth percentile throughput failed request value from the throughput failed request records;

select (324) a) the prediction-based throughput as the recommended throughput in response to the Nth percentile rate limited request value being less than or equal to a rate limited request threshold, the Nth percentile error rate value being less than or equal to an error rate threshold, the Nth percentile throughput failed request value being less than or equal to a throughput failed request threshold, and a prediction accuracy being greater than an accuracy threshold or b) the statistics-based throughput as the recommended throughput in response to the Nth percentile rate limited request value being less than or equal to the rate limited request threshold, the Nth percentile error rate value being less than or equal to the error rate threshold, the Nth percentile throughput failed request value being less than or equal to the throughput failed request threshold, and the prediction accuracy being less than or equal to the accuracy threshold;;

perform (329) a throughput determination to execute a throughput optimization for the target NoSQL database service based on the recommended throughput; and

generate (330) the TPO token based on the throughput determination.

2. The system of claim 1, wherein the optimization circuitry is configured to:

determine the statistical throughput consumption value as a Nth percentile consumed throughput value of the target consumed throughputs;

wherein the Nth percentile is greater than or equal to a 95th percentile.

3. The system of claim 2, wherein the optimization circuitry is configured to:

in response to neither the prediction-based throughput nor the statistics-based throughput being selected as the recommended throughput,

calculate an average provisioned throughput from the provisioned throughputs,

add a provisioned buffer to the average provisioned throughput to obtain a buffered provisioned throughput, and

select the buffered provisioned throughput as the recommended throughput.

4. The system of claim 3, wherein the optimization circuitry is further configured to generate a consumption optimization preview for the target NoSQL database service based on the recommended throughput, the average provisioned throughput, and consumption metrics data for the target NoSQL database service;

wherein, optionally, the optimization circuitry is further configured to determine a priority to execute the throughput optimization for the target NoSQL database service based on the consumption optimization preview.

5. The system of any one of the preceding claims, wherein the optimization circuitry is further configured to:

select target provisioned throughputs from the provisioned throughputs based on the predetermined time granularity, each of the target provisioned throughputs having a maximum provisioned throughput value among provisioned throughputs within respective time intervals with the predetermined time granularity;
calculate a Nth percentile provisioned throughput value from the target provisioned throughputs;
calculate a throughput consumption ratio based on the Nth percentile provisioned throughput value and the statistical throughput consumption value;
determine a prediction-based throughput buffer to add to the prediction-based throughput based on the throughput consumption ratio;
add the prediction-based throughput buffer to the prediction-based throughput to obtain a first buffered throughput;
determine a statistics-based throughput buffer to add to the statistics-based throughput based on the throughput consumption ratio; and
add the statistics-based throughput buffer to the statistics-based throughput to obtain a second buffered throughput; and
wherein said selection of the prediction-based throughput as the recommended throughput is selection of the first buffered throughput as the recommended throughput and wherein said selection of the statistics-based throughput as the recommended throughput is selection of the second buffered throughput as the recommended throughput.

6. The system of any one of the preceding claims, wherein:

the TPO stack is further executable to, at a presentation layer of the TPO stack, generate a TPO control interface including a TPO-window presentation; and
the TPO-window presentation includes a selectable option to execute the throughput optimization;

wherein, optionally:

(a) the TPO-window presentation further includes a selectable option to reject execution of the throughput optimization; and/or
(b) the TPO-window presentation is configured to display multiple throughput optimizations, each of the respective throughput optimizations for a corresponding database service.

7. The system of any one of the preceding claims, wherein the optimization circuitry is further configured to:

calculate a database service volume usage ratio based on a provisioned database service volume on the target NoSQL database service and a consumed database service storage volume by the target NoSQL database service;
determine a recommended database service storage volume for the target NoSQL database service based on the database service volume usage ratio;
perform a storage volume determination to execute a storage volume optimization for the target NoSQL database service based on the recommended database service storage volume; and
generate the TPO token based on the throughput determination and the storage volume determination.

8. The system of any one of the preceding claims, wherein:

(a) the prediction engine includes a long short-term memory neural network model trained to predict throughput of the target NoSQL database service; and/or
(b) the target NoSQL database service is a NoSQL database or a NoSQL container in the NoSQL database.

9. The system of any one of the preceding claims, wherein the optimization circuitry is further configured to:
select the target NoSQL database service from a plurality of candidate database services by:

obtaining a utilization time length for a candidate database service;
obtaining a utilization data missing coefficient for the candidate database service; and

determination of the candidate database service as the target NoSQL database service by comparison of the utilization time length to a utilization time length threshold and comparison of the utilization data missing coefficient to a data missing tolerance threshold.

10. The system of any one of the preceding claims, wherein each of the target consumed throughputs has a maximum consumed throughput value among consumed throughputs within respective time intervals with the predetermined time granularity and each of the target performance metric data has a maximum performance metric value among database service performance metric data within respective time intervals with the predetermined time granularity; wherein, optionally, the TPO stack is further executable to:

at an input layer of the TPO stack:

obtain, via the network interface circuitry, the utilization tracking data; and
store the utilization tracking data via a database service operation at a data-staging layer of the TPO stack;

at a configuration layer of the TPO stack:

determine the TPO interval; and
determine the performance metric threshold.

11. A method (300) comprising:

receiving (302), at network interface circuitry (110), utilization tracking data for a target NoSQL database service provisioned with provisioned throughputs, a provisioned throughput representing a capacity of the target NoSQL database service to process data per unit time;
executing a throughput optimization (TPO) stack (122) with optimization circuitry (120), the optimization circuitry in data communication with the network interface circuitry, executing the TPO stack comprising:

obtaining (312), at a prescriptive engine layer of the TPO stack, consumed throughputs for each unit time from the utilization tracking data;
predicting (314), at the prescriptive engine layer, based on the consumed throughputs, a prediction-based throughput over a TPO interval for the target NoSQL database service with a prediction engine;
selecting (315), at the prescriptive engine layer, target consumed throughputs from the consumed throughputs based on a predetermined time granularity;
determining (316), at the prescriptive engine layer, a statistical throughput consumption value from the target consumed throughputs, wherein the statistical throughput consumption value is greater than consumed throughput values of a predetermined portion of the target consumed throughputs;
calculating (317), at the prescriptive engine layer, a statistics-based throughput over the TPO interval for the target NoSQL database service based on the statistical throughput consumption value;
extracting (318), at the prescriptive engine layer, database service performance metric data for each unit time from the utilization tracking data;
selecting (319), at the prescriptive engine layer, target performance metric data from the database service performance metric data based on the predetermined time granularity, wherein the target performance metric data comprises rate limited request records, error rate records, and throughput failed request records;
calculating (320) a Nth percentile rate limited request value from the rate limited request records, a Nth percentile error rate value from the error rate records, and a Nth percentile throughput failed request value from the throughput failed request records;
selecting (324) a) the prediction-based throughput as the recommended throughput in response to the Nth percentile rate limited request value being less than or equal to a rate limited request threshold, the Nth percentile error rate value being less than or equal to an error rate threshold, the Nth percentile throughput failed request value being less than or equal to a throughput failed request threshold, and a prediction accuracy being greater than an accuracy threshold or b) the statistics-based throughput as the recommended throughput in response to the Nth percentile rate limited request value being less than or equal to the rate limited request threshold, the Nth percentile error rate value being less than or equal to the error rate threshold, the Nth percentile throughput failed request value being less than or equal to the throughput failed request threshold, and the prediction accuracy being less than or equal to the accuracy threshold;
performing (329), at the prescriptive engine layer, a throughput determination to execute a throughput optimization for the target NoSQL database service based on the recommended throughput; and

generating (330), at the prescriptive engine layer, a TPO token based on the throughput determination; and

sending (332), via the network interface circuitry, the TPO token to a host interface (130) configured to execute the TPO token to provision the target NoSQL database service with the recommended throughput.

**12.** A computer program which, when executed by a machine, cause the machine to carry out the method of claim 11.

**13.** A medium storing the computer program of claim 12.

**Patentansprüche**

**1.** System (100), das umfasst:

eine Netzwerk-Schnittstellenschaltung (110), die konfiguriert ist zum:

Empfangen (302) von Nutzungs-Nachverfolgungsdaten für einen Ziel-NoSQL-Datenbankdienst, für den bereitgestellte Durchsätze zur Verfügung stehen, wobei ein bereitgestellter Durchsatz eine Leistungsfähigkeit des Ziel-NoSQL-Datenbankdienstes darstellt, Daten pro Zeiteinheit zu verarbeiten; und
Senden (332) eines Durchsatz-Optimierungs(TPO)-Tokens an eine Host-Schnittstelle (130), wobei die Host-Schnittstelle zur Ausführung des TPO-Tokens konfiguriert ist, um für den Ziel-NoSQL-Datenbankdienst einen empfohlenen Durchsatz zur Verfügung zu stellen;

eine Optimierungsschaltung (120), die in Datenkommunikation mit der Netzwerk-Schnittstellenschaltung steht, wobei die Optimierungsschaltung zur Ausführung eines TPO-Stacks (122) konfiguriert ist, wobei der TPO-Stack ausführbar ist zum:
an einer präskriptiven Engine-Layer (250) des TPO-Stacks:

Erhalten (312) aufgebrauchter Durchsätze für jede Zeiteinheit von den Nutzungs-Nachverfolgungsdaten;
Vorhersagen (314), basierend auf den aufgebrauchten Durchsätzen, eines vorhersagebasierten Durchsatzes über ein TPO-Intervall für den Ziel-NoSQL-Datenbankdienst mit einer Vorhersage-Engine;
Auswählen (315) von Ziel-Verbrauchsdurchsätzen aus den aufgebrauchten Durchsätzen basierend auf einer vorher festgelegten Zeitgranularität;
Bestimmen (316) eines statistischem Durchsatz-Verbrauchswerts aus den Ziel-Verbrauchsdurchsätzen, wobei der statistische Durchsatz-Verbrauchswert größer ist als die Verbrauchsdurchsatzwerte eines vorher festgelegten Teils der Ziel-Verbrauchsdurchsätze;
Berechnen (317) eines auf Statistik basierten Durchsatzes über das TPO-Intervall für den Ziel-NoSQL-Datenbankdienst basierend auf dem statistischen Durchsatz-Verbrauchswert;
Extrahieren (318) von metrischen Datenbank-Serviceleistungsdaten für jede Zeiteinheit aus den Nutzungs-Nachverfolgungsdaten;
Auswählen (319) von metrischen Ziel-Leistungsdaten aus den metrischen Datenbank-Serviceleistungsdaten basierend auf der vorher festgelegten Zeitgranularität, wobei die metrischen Ziel-Leistungsdaten ratenlimitierte Anforderungsdatensätze, Fehlerratendatensätze sowie durchsatzfehlgeschlagene Anforderungsdatensätze umfassen;
Berechnen (320) eines N-ten Perzentil ratenlimitierten Anforderungswerts aus den ratenlimitierten Anforderungsdatensätzen, eines N-ten Perzentil Fehlerratenwerts aus den Fehlerratendatensätzen sowie eines N-ten Perzentil durchsatzfehlgeschlagenen Anforderungswerts aus den durchsatzfehlgeschlagenen Anforderungsdatensätzen;
Auswählen (324) a) des vorhersagebasierten Durchsatzes als der empfohlene Durchsatz ansprechend darauf, dass der N-te Perzentil ratenlimitierte Anforderungswert kleiner oder gleich einem ratenlimitierten Anforderungsschwellenwert ist, dass der N-te Perzentil Fehlerratenwert kleiner oder gleich einem Fehlerraten-Schwellenwert ist, dass der N-te Perzentil durchsatzfehlgeschlagene Anforderungswert kleiner oder gleich einem durchsatzfehlgeschlagenen Anforderungsschwellenwert ist, und dass eine Vorhersagegenauigkeit größer als ein Genauigkeits-Schwellenwert ist, oder b) des statistikbasierten Durchsatzes als der empfohlene Durchsatz ansprechend darauf, dass der N-te Perzentil ratenlimitierte Anforderungswert kleiner oder gleich dem ratenlimitierten Anforderungsschwellenwert ist, dass der N-te Perzentil Fehlerratenwert kleiner oder gleich dem Fehlerraten-Schwellenwert ist, dass der N-te Perzentil durchsatzfehlgeschlagene Anforderungswert kleiner oder gleich dem durchsatzfehlgeschlagenen Anforderungsschwellenwert ist, und dass die Vorhersagegenauigkeit kleiner oder gleich dem Genauigkeits-Schwellenwert ist;
Ausführen (329) einer Durchsatzbestimmung zur Ausführung einer Durchsatzoptimierung für den Ziel-NoSQL-Datenbankdienst basierend auf dem empfohlenen Durchsatz; und
Erzeugen (330) des TPO-Tokens basierend auf der Durchsatzbestimmung.

2. System nach Anspruch 1, wobei die Optimierungsschaltung konfiguriert ist zum:

Bestimmen des statistischen Durchsatzverbrauchswert als ein N-ter Perzentil Verbrauchsdurchsatzwert der Ziel-Verbrauchsdurchsätze;
wobei das N-te Perzentil größer oder gleich einem 95%-Perzentil ist.

3. System nach Anspruch 2, wobei die Optimierungsschaltung konfiguriert ist zum:
ansprechend darauf, dass weder der vorhersagebasierte Durchsatz noch der statistikbasierte Durchsatz als der empfohlene Durchsatz ausgewählt werden,

Berechnen eines durchschnittlichen bereitgestellten Durchsatzes aus den bereitgestellten Durchsätzen,
Hinzufügen eines bereitgestellten Puffers zu dem durchschnittlichen bereitgestellten Durchsatz zum Erhalt eines gepufferten bereitgestellten Durchsatzes, und
Auswählen des gepufferten bereitgestellten Durchsatzes als der empfohlene Durchsatz.

4. System nach Anspruch 3, wobei die Optimierungsschaltung des Weiteren konfiguriert ist, um eine Verbrauchsoptimierungs-Vorschau für den Ziel-NoSQL-Datenbankdienst basierend auf dem empfohlenen Durchsatz, dem durchschnittlichen bereitgestellten Durchsatz sowie metrischen Verbrauchsdaten für den Ziel-NoSQL-Datenbankdienst zu erzeugen;
wobei, optional, die Optimierungsschaltung des Weiteren konfiguriert ist, um eine Priorität zur Ausführung der Durchsatzoptimierung für den Ziel-NoSQL-Datenbankdienst basierend auf der Verbrauchsoptimierungs-Vorschau zu bestimmen.

5. System nach einem der vorhergehenden Ansprüche, wobei die Optimierungsschaltung des Weiteren konfiguriert ist zum:

Auswählen von bereitgestellten Ziel-Durchsätzen aus den bereitgestellten Durchsätzen basierend auf der vorher festgelegten Zeitgranularität, wobei jeder der bereitgestellten Ziel-Durchsätze einen maximalen bereitgestellten Durchsatzwert unter bereitgestellten Durchsätzen innerhalb jeweiliger Zeitintervalle mit der vorher festgelegten Zeitgranularität aufweist;
Berechnen eines N-ten Perzentil bereitgestellten Durchsatzwerts aus den bereitgestellten Ziel-Durchsätzen;
Berechnen eines Durchsatz-Verbrauchsverhältnisses basierend auf dem N-ten Perzentil bereitgestellten Durchsatzwert und dem statistischen Durchsatzverbrauchswert;
Bestimmen eines vorhersagebasierten Durchsatzpuffers zur Addition zu dem vorhersagebasierten Durchsatz basierend auf dem Durchsatz-Verbrauchsverhältnis;
Addieren des vorhersagebasierten Durchsatzpuffers zu dem vorhersagebasierten Durchsatz zum Erhalt eines ersten gepufferten Durchsatzes;
Bestimmen eines statistikbasierten Durchsatzpuffers zur Addition zu dem statistikbasierten Durchsatz basierend auf dem Durchsatz-Verbrauchsverhältnis; und
Addieren des statistikbasierten Durchsatzpuffers zu dem statistikbasierten Durchsatz zum Erhalt eines zweiten gepufferten Durchsatzes; und
wobei die Auswahl des vorhersagebasierten Durchsatzes als der empfohlene Durchsatz eine Auswahl des ersten gepufferten Durchsatzes als der empfohlene Durchsatz ist, und wobei diese Auswahl des statistikbasierten Durchsatzes als der empfohlene Durchsatz eine Auswahl des zweiten gepufferten Durchsatzes als der empfohlene Durchsatz ist.

6. System nach einem der vorhergehenden Ansprüche, wobei:

der TPO-Stack weiter ausführbar ist, um an einer Präsentations-Layer des TPO-Stacks,
eine TPO-Steuerschnittstelle zu erzeugen, die eine TPO-Fensterpräsentation umfasst; und
die TPO-Fensterpräsentation eine Auswahloption zur Ausführung der Durchsatzoptimierung umfasst;

wobei, optional:

(a) die TPO-Fensterpräsentation des Weiteren eine auswählbare Option zur Ablehnung einer Ausführung der Durchsatzoptimierung umfasst; und/oder

(b) die TPO-Fensterpräsentation konfiguriert ist, um mehrere Durchsatzoptimierungen anzuzeigen, wobei jede der entsprechenden Durchsatzoptimierungen für einen entsprechenden Datenbankdienst ist.

7. System nach einem der vorhergehenden Ansprüche, wobei die Optimierungsschaltung des Weiteren konfiguriert ist zum:

Berechnen eines Volumen-Nutzungsverhältnisses eines Datenbankdienstes basierend auf einem bereitgestellten Datenbankdienst-Volumen auf dem Ziel-NoSQL-Datenbankdienst und einem verbrauchten Datenbankdienst-Speichervolumen durch den Ziel-NoSQL-Datenbankdienst;

Bestimmen eines empfohlenen Datenbankdienst-Speichervolumens für den Ziel-NoSQL-Datenbankdienst basierend auf dem Datenbankdienst-Volumen-Nutzungsverhältnis;

Ausführen einer Speichervolumen-Bestimmung zur Ausführung einer Speichervolumen-Optimierung für den Ziel-NoSQL-Datenbankdienst basierend auf dem empfohlenen Datenbankdienst-Speichervolumen; und

Erzeugen des TPO-Tokens basierend auf der Durchsatzbestimmung und der Speichervolumen-Bestimmung.

8. System nach einem der vorhergehenden Ansprüche, wobei:

(a) die Vorhersage-Engine ein neuronales Netzwerkmodell mit einem langen Kurzzeitgedächtnis umfasst, das zur Vorhersage eines Durchsatzes des Ziel-NoSQL-Datenbankdienstes trainiert ist; und/oder

(b) der Ziel-NoSQL-Datenbankdienst eine NoSQL-Datenbank oder ein NoSQL-Container in der NoSQL-Datenbank ist.

9. System nach einem der vorhergehenden Ansprüche, wobei die Optimierungsschaltung des Weiteren konfiguriert ist zum:

Auswählen des Ziel-NoSQL-Datenbankdienstes aus einer Vielzahl von Kandidaten-Datenbankdiensten durch:

Erhalt einer Nutzungszeitlänge für einen Kandidaten-Datenbankdienst;

Erhalt eines fehlenden Koeffizienten der Nutzungsdaten für den Kandidaten-Datenbankdienst; und

Bestimmung des Kandidaten-Datenbankdienstes als den Ziel-NoSQL-Datenbankdienst durch Vergleich der Nutzungszeitlänge mit einem Nutzungszeitlängen-Schwellenwert und durch Vergleich des fehlenden Koeffizienten der Nutzungsdaten mit einem Fehldatentoleranz-Schwellenwert.

10. System nach einem der vorhergehenden Ansprüche, wobei jeder der Ziel-Verbrauchsdurchsätze einen maximalen Verbrauchsdurchsatzwert unter den Verbrauchsdurchsätzen innerhalb jeweiliger Zeitintervalle mit der vorher festgelegten Zeitgranularität aufweist, und jede der metrischen Ziel-Leistungsdaten einen maximalen metrischen Leistungswert unter den metrischen Datenbankdienst-Leistungsdaten innerhalb jeweiliger Zeitintervalle mit der vorher festgelegten Zeitgranularität aufweist;

wobei, optional, der TPO-Stack des Weiteren ausführbar ist zum:

an einer Input-Layer des TPO-Stacks:

Erhalten, über die Netzwerk-Schnittstellenschaltung, der Nutzungsnachverfolgungsdaten; und

Speichern der Nutzungsnachverfolgungsdaten über einen Datenbankdienstbetrieb an einer Datenbereitstellungs-Layer des TPO-Stacks;

an einer Konfigurations-Layer des TPO-Stacks:

Bestimmen des TPO-Intervalls; und

Bestimmen des metrischen Leistungs-Schwellenwerts.

11. Verfahren (300), das umfasst:

Empfang (302), an einer Netzwerk-Schnittstellenschaltung (110), von Nutzungsnachverfolgungsdaten für einen Ziel-NoSQL-Datenbankdienst, für den bereitgestellte Durchsätze zur Verfügung stehen, wobei ein bereitgestellter Durchsatz eine Leistungsfähigkeit des Ziel-NoSQL-Datenbankdienstes zur Verarbeitung von Daten pro Zeiteinheit darstellt;

Ausführung eines Durchsatzoptimierungs(TPO)-Stacks (122) mit einer Optimierungsschaltung (120), wobei die Optimierungsschaltung in Datenkommunikation mit der Netzwerk-Schnittstellenschaltung steht, wobei die Ausführung des TPO-Stacks umfasst:

Erhalten (312), an einer präskriptiven Engine-Layer des TPO-Stacks, von aufgebrauchten Durchsätzen für jede Zeiteinheit aus den NutzungsNachverfolgungsdaten;

Vorhersagen (314), an der präskriptiven Engine-Layer des TPO-Stacks, basierend auf den aufgebrauchten Durchsätzen, eines vorhersagebasierten Durchsatzes über ein TPO-Intervall für den Ziel-NoSQL-Datenbankdienst mit einer Vorhersage-Engine;

Auswählen (315), an der präskriptiven Engine-Layer, von aufgebrauchten Zieldurchsätzen aus den aufgebrauchten Durchsätzen basierend auf einer vorher festgelegten Zeitgranularität;

Bestimmen (316), an der präskriptiven Engine-Layer, eines statistischen Durchsatz-Verbrauchswerts aus den Ziel-Verbrauchsdurchsätzen, wobei der statistische Durchsatz-Verbrauchswert größer ist als die verbrauchten Durchsatzwerte eines vorher festgelegten Teils der Ziel-Verbrauchsdurchsätze;

Berechnen (317), an der präskriptiven Engine-Layer, eines auf Statistik basierten Durchsatzes über das TPO-Intervall für den Ziel-NoSQL-Datenbankdienst basierend auf dem statistischen Durchsatz-Verbrauchswert;

Extrahieren (318), an der präskriptiven Engine-Layer, von metrischen Datenbankdienst-Leistungsdaten für jede Zeiteinheit aus den Nutzungs-Nachverfolgungsdaten;

Auswählen (319), an der präskriptiven Engine-Layer, von metrischen Ziel-Leistungsdaten aus den metrischen Datenbankdienst-Leistungsdaten basierend auf der vorher festgelegten Zeitgranularität, wobei die metrischen Ziel-Leistungsdaten ratenlimitierte Anforderungsdatensätze, Fehlerratendatensätze sowie durchsatzfehlgeschlagene Anforderungsdatensätze umfasst;

Berechnen (320) eines N-ten Perzentil ratenlimitierten Anforderungswerts aus den ratenlimitierten Anforderungsdatensätzen, eines N-ten Perzentil Fehlerratenwerts aus den Fehlerratendatensätzen sowie eines N-ten Perzentil durchsatzfehlgeschlagenen Anforderungswerts aus den durchsatzfehlgeschlagenen Anforderungsdatensätzen;

Auswählen (324) a) des vorhersagebasierten Durchsatzes als der empfohlene Durchsatz ansprechend darauf, dass der N-te Perzentil ratenlimitierte Anforderungswert kleiner oder gleich einem ratenlimitierten Anforderungsschwellenwert ist, dass der N-te Perzentil Fehlerratenwert kleiner oder gleich einem Fehlerraten-Schwellenwert ist, dass der N-te Perzentil durchsatzfehlgeschlagene Anforderungswert kleiner oder gleich einem durchsatzfehlgeschlagenen Anforderungsschwellenwert ist, und dass eine Vorhersagegenauigkeit größer als ein Genauigkeits-Schwellenwert ist, oder b) des statistikbasierten Durchsatzes als der empfohlene Durchsatz ansprechend darauf, dass der N-te Perzentil ratenlimitierte Anforderungswert kleiner oder gleich dem ratenlimitierten Anforderungsschwellen-wert ist, dass der N-te Perzentil Fehlerratenwert kleiner oder gleich dem Fehlerraten-Schwellenwert ist, dass der N-te Perzentil durchsatzfehlgeschlagene Anforde-rungswert kleiner oder gleich dem durchsatzfehlgeschlagenen Anforderungs-schwellenwert ist, und dass die Vorhersagegenauigkeit kleiner oder gleich dem Genauigkeits-Schwellenwert ist;

Ausführen (329), an der präskriptiven Engine-Layer, einer Durchsatzbestimmung zur Ausführung einer Durchsatzoptimierung für den Ziel-NoSQL-Datenbankdienst basierend auf dem empfohlenen Durchsatz; und

Erzeugen (330), an der präskriptiven Engine-Layer, eines TPO-Tokens basierend auf der Durchsatzbestimmung; und

Senden (332), über die Netzwerk-Schnittstellenschaltung, des TPO-Tokens an eine Host-Schnittstelle (130), die zur Ausführung des TPO-Tokens konfiguriert ist, um für den Ziel-NoSQL-Datenbankdienst den empfohlenen Durchsatz bereitzustellen.

**12.** Computerprogramm, das bei Ausführung durch eine Maschine, die Maschine veranlasst, das Verfahren nach Anspruch 11 auszuführen.

**13.** Datenträger, der das Computerprogramm nach Anspruch 12 speichert.

## Revendications

**1.** Système (100) comprenant :

un ensemble de circuits d'interface réseau (110) configurés pour :

recevoir (302) des données de suivi d'utilisation pour un service de base de données NoSQL cible provisionné avec des débits provisionnés, un débit provisionné représentant une capacité du service de base de données NoSQL cible à traiter des données par unité de temps ; et

envoyer (332) un jeton d'optimisation de débit (TPO) à une interface hôte (130), l'interface hôte étant configurée pour exécuter le jeton TPO afin d'approvisionner le service de base de données NoSQL cible avec un débit recommandé ;

un ensemble de circuits d'optimisation (120) en communication de données avec l'ensemble de circuits d'interface réseau, l'ensemble de circuits d'optimisation étant configuré pour exécuter une pile TPO (122), la pile TPO pouvant être exécutée pour :

au niveau d'une couche de moteur prescriptive (250) de la pile TPO :

obtenir (312) des débits consommés pour chaque unité de temps à partir des données de suivi d'utilisation ;

prédire (314), sur la base des débits consommés, un débit basé sur une prédiction sur un intervalle TPO pour le service de base de données NoSQL cible avec un moteur de prédiction ;

sélectionner (315) des débits consommés cibles à partir des débits consommés sur la base d'une granularité temporelle prédéterminée ;

déterminer (316) une valeur de consommation de débit statistique à partir des débits consommés cibles, la valeur de consommation de débit statistique étant supérieure aux valeurs de débits consommés d'une partie prédéterminée des débits consommés cibles ;

calculer (317) un débit basé sur des statistiques sur l'intervalle TPO pour le service de base de données NoSQL cible sur la base de la valeur de consommation de débit statistique ;

extraire (318) des données de mesure de performance de service de base de données pour chaque unité de temps à partir des données de suivi d'utilisation ;

sélectionner (319) des données de mesure de performance cibles à partir des données de mesure de performance de service de base de données sur la base de la granularité temporelle prédéterminée, où les données de mesure de performance cibles comprennent des enregistrements de demandes limitées de taux, des enregistrements de taux d'erreur et des enregistrements de demandes échouées de débit ;

calculer (320) une valeur de demande limitée de taux de Nième centile à partir des enregistrements de demandes limitées de taux, une valeur de taux d'erreur de Nième centile à partir des enregistrements de taux d'erreur, et une valeur de demande échouée de débit de Nième centile à partir des enregistrements de demandes échouées de débit ;

sélectionner (324) a) le débit basé sur une prédiction en tant que débit recommandé en réponse au fait que la valeur de demande limitée de taux de Nième centile est inférieure ou égale à un seuil de demande limité de taux, la valeur de taux d'erreur de Nième centile étant inférieure ou égale à un seuil de taux d'erreur, la valeur de demande échouée de débit de Nième centile étant inférieure ou égale à un seuil de demande échouée de débit, et une précision de prédiction étant supérieure à un seuil de précision ou b) le débit basé sur des statistiques en tant que débit recommandé en réponse au fait que la valeur de demande limitée de taux de Nième centile étant inférieure ou égale au seuil de demande limitée de taux, la valeur de taux d'erreur de Nième centile étant inférieure ou égale au seuil de taux d'erreur, la valeur de demande échouée de débit de Nième centile étant inférieure ou égale au seuil de demande échouée de débit, et la précision de prédiction étant inférieure ou égale au seuil de précision ;

effectuer (329) une détermination de débit pour exécuter une optimisation de débit pour le service de base de données NoSQL cible sur la base du débit recommandé ; et

générer (330) le jeton TPO sur la base de la détermination de débit.

2. Système de la revendication 1, dans lequel l'ensemble de circuits d'optimisation est configuré pour :

déterminer la valeur de consommation de débit statistique en tant que valeur de débit consommé de Nième centile des débits consommés cibles ;

dans lequel le Nième centile est supérieur ou égal à un 95ème centile.

3. Système de la revendication 2, dans lequel l'ensemble de circuits d'optimisation est configuré pour :

en réponse au fait que ni le débit basé sur une prédiction ni le débit basé sur des statistiques ne sont sélectionnés en tant que débit recommandé,

calculer un débit provisionné moyen à partir des débits provisionnés,

ajouter un tampon provisionné au débit provisionné moyen pour obtenir un débit provisionné tamponné, et

sélectionner le débit provisionné tamponné en tant que débit recommandé.

**4.** Système de la revendication 3, dans lequel l'ensemble de circuits d'optimisation est en outre configuré pour générer un aperçu d'optimisation de consommation pour le service de base de données NoSQL cible sur la base du débit recommandé, du débit provisionné moyen et des données de mesure de consommation pour le service de base de données NoSQL cible ;

dans lequel, éventuellement, l'ensemble de circuits d'optimisation est en outre configuré pour déterminer une priorité pour exécuter l'optimisation de débit pour le service de base de données NoSQL cible sur la base de l'aperçu d'optimisation de consommation.

**5.** Système de l'une quelconque des revendications précédentes, dans lequel l'ensemble de circuits d'optimisation est en outre configuré pour :

sélectionner des débits provisionnés cibles à partir des débits provisionnés sur la base de la granularité temporelle prédéterminée, chacun des débits provisionnés cibles ayant une valeur de débit provisionné maximal parmi les débits provisionnés dans des intervalles de temps respectifs avec la granularité temporelle prédéterminée ;

calculer une valeur de débit provisionné de Nième centile à partir des débits provisionnés cibles ;

calculer un rapport de consommation de débit sur la base de la valeur de débit provisionné de Nième centile et de la valeur de consommation de débit statistique ;

déterminer un tampon de débit basé sur une prédiction à ajouter au débit basé sur une prédiction sur la base du rapport de consommation de débit ;

ajouter le tampon de débit basé sur une prédiction au débit basé sur une prédiction pour obtenir un premier débit tamponné ;

déterminer un tampon de débit basé sur des statistiques à ajouter au débit basé sur des statistiques sur la base du rapport de consommation de débit ; et

ajouter le tampon de débit basé sur des statistiques au débit basé sur des statistiques pour obtenir un deuxième débit tamponné ; et

dans lequel ladite sélection du débit basé sur une prédiction en tant que débit recommandé est la sélection du premier débit tamponné en tant que débit recommandé et dans lequel ladite sélection du débit basé sur des statistiques en tant que débit recommandé est la sélection du deuxième débit tamponné en tant que débit recommandé.

**6.** Système de l'une quelconque des revendications précédentes, dans lequel :

la pile TPO peut en outre être exécutée pour, au niveau d'une couche de présentation de la pile TPO, générer une interface de commande TPO comportant une présentation de fenêtre TPO ; et

la présentation de fenêtre TPO comporte une option sélectionnable pour exécuter l'optimisation de débit ;

dans lequel, éventuellement :

(a) la présentation de fenêtre TPO comporte en outre une option sélectionnable pour rejeter l'exécution de l'optimisation de débit ; et/ou

(b) la présentation de fenêtre TPO est configurée pour afficher de multiples optimisations de débit, chacune des optimisations de débit respectives étant destinée à un service de base de données correspondant.

**7.** Système de l'une quelconque des revendications précédentes, dans lequel l'ensemble de circuits d'optimisation est en outre configuré pour :

calculer un rapport d'utilisation de volume de service de base de données sur la base d'un volume de service de base de données provisionné sur le service de base de données NoSQL cible et d'un volume de stockage de service de base de données consommé par le service de base de données NoSQL cible ;

déterminer un volume de stockage de service de base de données recommandé pour le service de base de données NoSQL cible sur la base du rapport d'utilisation de volume de service de base de données ;

effectuer une détermination de volume de stockage pour exécuter une optimisation de volume de stockage pour le service de base de données NoSQL cible sur la base du volume de stockage de service de base de données recommandé ; et

générer le jeton TPO sur la base de la détermination du débit et de la détermination de volume de stockage.

**8.** Système de l'une quelconque des revendications précédentes, dans lequel :

(a) le moteur de prédiction comporte un modèle de réseau neuronal à mémoire à long et court terme formé pour prédire un débit du service de base de données NoSQL cible ; et/ou

(b) le service de base de données NoSQL cible est une base de données NoSQL ou un conteneur NoSQL dans la base de données NoSQL.

**9.** Système de l'une quelconque des revendications précédentes, dans lequel l'ensemble de circuits d'optimisation est en outre configuré pour :

sélectionner le service de base de données NoSQL cible parmi une pluralité de services de base de données candidats par :

l'obtention d'une durée d'utilisation pour un service de base de données candidat ;
l'obtention d'un coefficient de données d'utilisation manquantes pour le service de base de données candidat ; et
la détermination du service de base de données candidat en tant que service de base de données NoSQL cible par comparaison de la durée d'utilisation à un seuil de durée d'utilisation et par comparaison du coefficient de données d'utilisation manquantes à un seuil de tolérance de données manquantes.

**10.** Système de l'une quelconque des revendications précédentes, dans lequel chacun des débits consommés cibles a une valeur de débit consommé maximal parmi des débits consommés dans des intervalles de temps respectifs avec la granularité temporelle prédéterminée et chacune des données de mesure de performance cible a une valeur de mesure de performance maximale parmi des données de mesure de performance de service de base de données dans des intervalles de temps respectifs avec la granularité temporelle prédéterminée ;

dans lequel, éventuellement, la pile TPO peut en outre être exécutée pour :

au niveau d'une couche d'entrée de la pile TPO :

obtenir, via l'ensemble de circuits d'interface réseau, les données de suivi d'utilisation ; et
stocker les données de suivi d'utilisation via une opération de service de base de données au niveau d'une couche de transfert de données de la pile TPO ;

au niveau d'une couche de configuration de la pile TPO :

déterminer l'intervalle TPO ; et
déterminer le seuil de mesure de performance.

**11.** Procédé (300) comprenant les étapes consistant en :

la réception (302), au niveau d'un ensemble de circuits d'interface réseau (110), de données de suivi d'utilisation pour un service de base de données NoSQL cible provisionné avec des débits provisionnés, un débit provisionné représentant une capacité du service de base de données NoSQL cible à traiter des données par unité de temps ;
l'exécution d'une pile d'optimisation de débit (TPO) (122) avec un ensemble de circuits d'optimisation (120), l'ensemble de circuits d'optimisation étant en communication de données avec l'ensemble de circuits d'interface réseau, l'exécution de la pile TPO comprenant :

l'obtention (312), au niveau d'une couche de moteur prescriptive de la pile TPO, de débits consommés pour chaque unité de temps à partir des données de suivi d'utilisation ;
la prédiction (314), au niveau de la couche de moteur prescriptive, sur la base des débits consommés, d'un débit basé sur une prédiction sur un intervalle TPO pour le service de base de données NoSQL cible avec un moteur de prédiction ;
la sélection (315), au niveau de la couche de moteur prescriptive, de débits consommés cibles à partir des débits consommés sur la base d'une granularité temporelle prédéterminée ;
la détermination (316), au niveau de la couche de moteur prescriptive, d'une valeur de consommation de débit statistique à partir des débits consommés cibles, la valeur de consommation de débit statistique étant supérieure aux valeurs de débits consommés d'une partie prédéterminée des débits consommés cibles ;
le calcul (317), au niveau de la couche de moteur prescriptive, d'un débit basé sur des statistiques sur l'intervalle TPO pour le service de base de données NoSQL cible sur la base de la valeur de consommation de débit statistique ;
l'extraction (318), au niveau de la couche de moteur prescriptive, de données de mesure de performance de service de base de données pour chaque unité de temps à partir des données de suivi d'utilisation ;

la sélection (319), au niveau de la couche de moteur prescriptive, de données de mesure de performance cible à partir des données de mesure de performance de service de base de données sur la base de la granularité temporelle prédéterminée, les données de mesure de performance cible comprenant des enregistrements de demandes limitées de taux, des enregistrements de taux d'erreur et des enregistrements de demandes échouées de débit ;

le calcul (320) d'une valeur de demande limitée de taux de Nième centile à partir des enregistrements de demandes limitées de taux, d'une valeur de taux d'erreur de Nième centile à partir des enregistrements de taux d'erreur, et d'une valeur de demande échouée de débit de Nième centile à partir des enregistrements de demandes échouées de débit ;

la sélection (324) a) du débit basé sur une prédiction en tant que débit recommandé en réponse au fait que la valeur de demande limitée de taux de Nième centile étant inférieure ou égale à un seuil de demande limitée de taux, la valeur de taux d'erreur de Nième centile étant inférieure ou égale à un seuil de taux d'erreur, la valeur de demande échouée de débit de Nième centile étant inférieure ou égale à un seuil de demande échouée de débit, et une précision de prédiction étant supérieure à un seuil de précision ou b) du débit basé sur des statistiques en tant que débit recommandé en réponse au fait que la valeur de demande limitée de taux de Nième centile étant inférieure ou égale au seuil de demande limitée de taux, la valeur de taux d'erreur de Nième centile étant inférieure ou égale au seuil de taux d'erreur, la valeur de demande échouée de débit de Nième centile étant inférieure ou égale au seuil de demande échouée de débit, et la précision de prédiction étant inférieure ou égale au seuil de précision ;

le fait d'effectuer (329), au niveau de la couche de moteur prescriptive, une détermination de débit pour exécuter une optimisation de débit pour le service de base de données NoSQL cible sur la base du débit recommandé ; et

la génération (330), au niveau de la couche de moteur prescriptive, d'un jeton TPO sur la base de la détermination de débit ; et

l'envoi (332), via l'ensemble de circuits d'interface réseau, du jeton TPO à une interface hôte (130) configurée pour exécuter le jeton TPO afin d'approvisionner le service de base de données NoSQL cible avec le débit recommandé.

12. Programme informatique qui, lorsqu'il est exécuté par une machine, amène la machine à mettre en œuvre le procédé de la revendication 11.

13. Support stockant le programme informatique de la revendication 12.

Figure 1A

EP 3 905 050 B1

NoSQL Database

150

{ }

**10K RU**

Collections

{ }

Collection 1

{ }

Collection 25

Partition set 152

⟸ **Max of 10K RU/s for any container**

NoSQL Database

160

{ }

**10K RU**

Collections

{ }

Collection 1

{ }

Collection 25  Partition set 162

⟸ **Max of 5K RU/s for any container**

Collections

{ }

Collection 26

{ }

Collection 50  Partition set 164

⟸ **Max of 5K RU/s for any container**

Figure 1B

200

| Data Staging Layer | 205 |

| Input Layer | 212 ● 215 | 210 |

812

211

| Configuration Layer | 221 | 222 | 220 |

| Prescriptive Engine Layer | 250 |
| 221 | 222 ●─ 215 |

Prescriptive Database/Container
Throughput Optimization
Recommendations

| TPO Token | 252 |

| Presentation Layer | 260 |
| TPO Control Interface | 266 |
| TPO-Window Presentation | 268 |

| Data Export Layer | 270 |
| JSON | XML | TBWX |
| CSV | HTML |

| Flat File | Streaming | Web Service |

Figure 2

300

| Obtain utilization tracking data | 302 |
| --- | --- |

↓

| Pre-process utilization tracking data | 304 |
| --- | --- |

↓

| Store the pre-processed utilization tracking data | 306 |
| --- | --- |

↓

| Determine a TPO interval | 308 |
| --- | --- |

↓

| Determine performance metric thresholds | 310 |
| --- | --- |

↓

| Select target databases/containers from candidate databases/containers | 311 |
| --- | --- |

↓

| Obtain consumed throughputs | 312 |
| --- | --- |

↓

| Predict prediction-based throughput based on consumed throughputs | 314 |
| --- | --- |

↓

| Select target consumed throughputs from consumed throughputs | 315 |
| --- | --- |

↓

| Determine statistical throughput consumption value | 316 |
| --- | --- |

↓

| Calculate a statistics-based throughput | 317 |
| --- | --- |

| Extract performance metric data | 318 |
| --- | --- |

↓

| Select target performance metric data | 319 |
| --- | --- |

↓

| Determine statistical performance metric value | 320 |
| --- | --- |

↓

| Evaluate prediction accuracy | 322 |
| --- | --- |

↓

| Select one of prediction-based throughput and statistics-based throughput as recommended throughout based on statistical performance metric value and prediction accuracy | 324 |
| --- | --- |

↓

| Store the prescriptive recommendations | 326 |
| --- | --- |

↓

| Access the prescriptive recommendations to generate a TPO-control interface | 328 |
| --- | --- |

↓

| Perform throughput determination | 329 |
| --- | --- |

↓

| Generate a TPO token | 330 |
| --- | --- |

↓

| Send TPO token to a host interface | 332 |
| --- | --- |

Figure 3

29

Figure 4

Figure 5A

| Casmas Resource ID | DB RU Recommendation | Storage Sizing |
|---|---|---|
| Micorsaft.Amure/CasmasDB/DB/DB1 | Yes | No |
| Micorsaft.Amure/CasmasDB/DB/DB2 | Yes | No |
| Micorsaft.Amure/CasmasDB/DB/DB3 | Casmas Resource ID | |
| Micorsaft.Amure/CasmasDB/DB/DB4 | Microsaft.Amure/CasmasDB/DB/DB3/CT1 | |
| Micorsaft.Amure/CasmasDB/DB/DB5 | Microsaft.Amure/CasmasDB/DB/DB3/CT2 | |
| Micorsaft.Amure/CasmasDB/DB/DB6 | Microsaft.Amure/CasmasDB/DB/DB3/CT3 | |
| Micorsaft.Amure/CasmasDB/DB/DB7 | Microsaft.Amure/CasmasDB/DB/DB3/CT4 | |
| Micorsaft.Amure/CasmasDB/DB/DB8 | Microsaft.Amure/CasmasDB/DB/DB3/CT5 | |
|  | Microsaft.Amure/CasmasDB/DB/DB3/CT6 | |
| Micorsaft.Amure/CasmasDB/DB/DB9 | Yes | No |
| Micorsaft.Amure/CasmasDB/DB/DB10 | Yes | No |
| Micorsaft.Amure/CasmasDB/DB/DB11 | Yes | Yes |
| Micorsaft.Amure/CasmasDB/DB/DB12 | Yes | No |
| Micorsaft.Amure/CasmasDB/DB/DB13 | Yes | No |
| Micorsaft.Amure/CasmasDB/DB/DB14 | Yes | Yes |
| Micorsaft.Amure/CasmasDB/DB/DB15 | Yes | Yes |
| Micorsaft.Amure/CasmasDB/DB/DB16 | Yes | Yes |
| Micorsaft.Amure/CasmasDB/DB/DB17 | Yes | Yes |
| Micorsaft.Amure/CasmasDB/DB/DB18 | Yes | Yes |
| Micorsaft.Amure/CasmasDB/DB/DB19 | Yes | Yes |
| Micorsaft.Amure/CasmasDB/DB/DB20 | Yes | No |
| Micorsaft.Amure/CasmasDB/DB/DB21 | Yes | Yes |
| Micorsaft.Amure/CasmasDB/DB/DB22 | Yes | No |
| Micorsaft.Amure/CasmasDB/DB/DB23 | Yes | Yes |
| Micorsaft.Amure/CasmasDB/DB/DB24 | No | Yes |
| Micorsaft.Amure/CasmasDB/DB/DB25 | Yes | No |
| Micorsaft.Amure/CasmasDB/DB/DB26 | Yes | No |
| Micorsaft.Amure/CasmasDB/DB/DB27 | Yes | No |
| Micorsaft.Amure/CasmasDB/DB/DB28 | No | Yes |
| Micorsaft.Amure/CasmasDB/DB/DB29 | Yes | No |
| Micorsaft.Amure/CasmasDB/DB/DB30 | Yes | No |

FROM
Figure 5A

TO
Figure 5C

Figure 5B

| Casmas DB Summary | | |
|---|---|---|
| Container RU Recommendation | Current Monthly Price ($) | Price Post Implementation ($) |
| Yes | $7,320 | $6,220 |
| No | $4,220 | $3,370 |
|  | $3,060 | $2,410 |
|  | $890 | $660 |
|  | $870 | $670 |
|  | $810 | $650 |
|  | $560 | $450 |
|  | $381 | $301 |
| No | $500 | $425 |
| Yes | $362 | $292 |
| No | $352 | $287 |
| Yes | $300 | $240 |
| No | $271 | $216 |
| Yes | $300 | $248 |
| Yes | $249 | $199 |
| No | $236 | $188 |
| No | $218 | $173 |
| Yes | $213 | $173 |
| No | $200 | $165 |
| Yes | $184 | $152 |
| Yes | $139 | $109 |
| Yes | $136 | $111 |
| Yes | $133 | $109 |
| Yes | $117 | $95 |
| Yes | $113 | $93 |
| No | $105 | $87 |
| Yes | $106 | $89 |
| Yes | $94 | $79 |
| Yes | $75 | $63 |
| Yes | $45 | $35 |

FROM
Figure 5B

TO
Figure. 5D

Figure 5C

| Potential Savings % (of total spend) | Potential Savings ($) |
|---|---|
| 15% | 1,100 |
| 20% | 850 |
| 21% | 650 |
| 26% | 230 |
| 23% | 200 |
| 20% | 160 |
| 20% | 110 |
| 21% | 80 |
| 15% | 75 |
| 19% | 70 |
| 18% | 65 |
| 20% | 60 |
| 20% | 55 |
| 17% | 52 |
| 20% | 50 |
| 20% | 48 |
| 21% | 45 |
| 19% | 40 |
| 18% | 35 |
| 17% | 32 |
| 22% | 30 |
| 18% | 25 |
| 18% | 24 |
| 19% | 22 |
| 18% | 20 |
| 17% | 18 |
| 16% | 17 |
| 16% | 15 |
| 16% | 12 |
| 22% | 10 |

FROM
Figure 5C

Figure 5D

34

Figure 6

EP 3 905 050 B1

700

Operator can select Approve/Reject/No Action choices per database/container

Approve

Reject

Select "Approve" option at database/container level  710

Repeat the approval selection process for all such databases/containers  712

After selecting all the databases/containers, click on " Multiple Approval"  714

Pop-up window to ask whether to proceed (Yes/No)  716

If Yes, Freeze Action, update the DB and tag  717

If No, revert to the "Approve" select state  718

Select "Reject" option at database/container level  720

Pop-up for every "reject" selection asking for Reject Code  722

Confirm "Rejection" action and update tag and DB  724

If operator wants to override reject action

Select the concerned resource and click on "RBR"  725

Confirm RBR pop-up window  726

If "Accept", follow the Approve flowchart  727

If "NA", restore the Action fields to NULL  728

Figure7

Communication Interfaces    812

Tx / Rx Circuitry
BT / WLAN / Ethernet / GigE
10GigE / 4G / LTE / LTE-A/5G

Serial Interface Circuitry
USB / 1394 / Lightning
I2C / slimBus

System Logic    814

Power    834

Input Interfaces    828

Processor(s)    816

Memory    820

Analytic Model Parameters    852

Optimization Routines    854

Operational Rules    856

Applications and Structures    866

Coded Objects

Templates

TOL    300

User Interface    818

GUI

800

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202041018140
- US 89668120
- EP 3495952 A
- US 9454321 B
- EP 3553658 A
- US 15939918